(19) **Europäisches Patentamt European Patent Office Office européen des brevets**

(11) **EP 4 438 195 B1**

(12) **EUROPEAN PATENT SPECIFICATION**

(45) Date of publication and mention of the grant of the patent:
**01.04.2026 Bulletin 2026/14**

(21) Application number: **22918227.4**

(22) Date of filing: **27.09.2022**

(51) International Patent Classification (IPC):
**B21B 37/00** (2006.01)　　　**G06Q 50/04** (2012.01)
**G06Q 10/08** (2024.01)

(52) Cooperative Patent Classification (CPC):
**G06Q 50/04; G06Q 10/06; G06Q 10/08;**
**G06Q 40/04;** Y02P 90/30

(86) International application number:
**PCT/CN2022/121615**

(87) International publication number:
**WO 2023/130773 (13.07.2023 Gazette 2023/28)**

(54) **METHOD AND DEVICE FOR CROSS-PROCESS USE OF COLD/HOT-ROLLED EXCESS MATERIAL, MEDIUM, AND PROGRAM PRODUCT**

VERFAHREN UND VORRICHTUNG ZUR PROZESSÜBERGREIFENDEN NUTZUNG VON KALT-/ WARMGEWALZTEM ÜBERSCHUSSMATERIAL, MEDIUM UND PROGRAMMPRODUKT

PROCÉDÉ ET DISPOSITIF D'UTILISATION INTER-PROCESSUS D'UN SURPLUS DE MATÉRIAU LAMINÉ À FROID/À CHAUD, SUPPORT ET PRODUIT SOUS FORME DE PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2022 CN 202210017717**

(43) Date of publication of application:
**02.10.2024 Bulletin 2024/40**

(73) Proprietor: **BAOSHAN IRON & STEEL CO., LTD.**
**Shanghai 201900 (CN)**

(72) Inventors:
- **JIA, Shujin**
  **Shanghai 201900 (CN)**
- **LIU, Qing**
  **Shanghai 201900 (CN)**
- **DU, Bin**
  **Shanghai 201900 (CN)**
- **MA, Qiansheng**
  **Shanghai 201900 (CN)**
- **LI, Zhaoyu**
  **Shanghai 201900 (CN)**

(74) Representative: **Nederlandsch Octrooibureau**
**P.O. Box 29720**
**2502 LS The Hague (NL)**

(56) References cited:
| | |
|---|---|
| CN-A- 1 661 609 | CN-A- 102 637 272 |
| CN-A- 102 651 114 | CN-A- 104 483 915 |
| CN-A- 104 573 956 | CN-A- 104 573 956 |
| CN-A- 108 876 050 | JP-A- 2003 330 528 |
| US-A- 6 044 361 | US-A- 6 044 361 |
| US-A1- 2011 187 717 | US-A1- 2016 125 336 |

## Description

This application claims priority to Chinese Patent Application No. 202210017717.1, filed with the Chinese Patent Office on January 7, 2022 and entitled "Method and Device for Cross-Process Use of Cold/Hot-Rolled Excess Material, Medium, and Program Product".

## Technical field

This disclosure relates to the field of metallurgical automation technologies, and in particular, to a method and device for cross-process use of cold/hot-rolled excess material, medium and program product.

## Background

At present, non-commissioned materials that do not belong to any contract are generated in different processes of a steel production procedure. This kind of non-commissioned materials can be called contract excess materials. The contract excess materials are not materials with quality problems, but materials generated because of production organization. So, the contract excess materials can be reused. The contract excess materials can be classified into hot-rolled excess materials, cold-rolled excess materials, and slab excess materials according to different material forms. Cold-rolled excess materials can also be classified into multiple types, such as acid washing coil, hard rolling coil, and hot-dip galvanizing coil according to different cold rolling processes.

In order to reduce cost and increase efficiency, the contract excess materials may be matched to futures contracts to reuse the contract excess materials in iron and steel enterprises. This process can be called the use of excess materials. On the one hand, by doing so, the excess materials can be reduced. On the other hand, the production cycle of the futures contracts can be shortened, improving customer's satisfaction.

During the process of the use of excess materials, a cross-process use may be involved. What's more, a coupling relationship between a front and a back process may exist. A change of rules for use is frequent, and types of materials are diversified. Therefore, implementation of the use of excess materials is difficult. At present, the use of cold/hot-rolled excess materials is implemented based on artificial experience in iron and steel enterprises. This method may cause following problems: work efficiency is low, mistakes are made easily, global optimization is difficult to achieve. Prior art reference JP 2003 330528 describes a method to determine the degree of freedom of an allocation of slabs using a two-part graph maximum weight matching method based on a particular aspect being optimized. The aspect being optimized includes quality, or retention period, or size of an excess slab of material.

## Summary

The invention is defined by the independent claims. Embodiments of this disclosure provide a method and device for cross-process use of cold/hot-rolled excess material, medium, and program product, so as to resolve a problem in the prior art that it is difficult to automatically implement the cross-process use of the cold/hot-rolled excess materials.

In a first aspect, an embodiment of this disclosure provides a method for cross-process use of cold/hot-rolled excess material, applied to an electronic device, comprising:

obtaining multiple futures contracts and multiple cold/hot-rolled excess materials with same steel grade, wherein the multiple cold/hot-rolled excess materials are used as deficient materials of corresponding processes in the multiple futures contracts;

forming at least one matching pair consisting of a futures contract and a cold/hot-rolled excess material by taking the multiple futures contracts and the multiple cold/hot-rolled excess materials as nodes in a weighted binary graph, to construct a matching relationship graph between the multiple futures contracts and the multiple cold/hot-rolled excess materials, and determining a matching weight of each matching pair in the at least one matching pair;

computing the matching relationship graph based on a binary graph maximum weight matching algorithm, to obtain a use solution between the multiple futures contract and the multiple cold/hot-rolled excess materials, wherein in the use solution, a matched cold/hot-rolled excess material is associated with a futures contract, and a maximum sum of matching weights of the at least one matching pair is obtained.

In a possible implementation of the first aspect, forming at least one matching pair consisting of a futures contract and a cold/hot-rolled excess material by taking the multiple futures contracts and the multiple cold/hot-rolled excess materials as nodes in a weighted binary graph, comprises:

determining a rule of use, wherein the rule of use is used to check whether the multiple futures contracts match the multiple cold/hot-rolled excess materials;
forming at least one matching pair consisting of a futures contract and a cold/hot-rolled excess material which meet the rule of use preset, by taking the multiple futures contracts and the multiple cold/hot-rolled excess materials as nodes in a weighted binary graph.

That is to say, in this implementation, the matching degree between futures contracts and cold/hot-rolled excess materials can be verified by the preset rule of use, which can be adjusted flexibly according to the actual situation. In addition, changes in matching degree can also be timely responded, so as to be able to make a use solution most in line with the current demand for matching, to avoid making invalid use solution.

In a possible implementation of the first aspect, determining a matching weight of each matching pair in the at least one matching pair, comprises:
determining a matching weight for each matching pair in the at least one matching pair according to preset matching priority information, wherein the matching priority information is used to describe a matching quality between the multiple futures contracts and the multiple cold/hot-rolled excess materials.

In this implementation, matching weights of futures contracts and the cold/hot-rolled excess materials can be determined based on preset matching priority information, which can be adjusted flexibly according to the actual situation. The preset matching priority information can be adjusted in time according to the personalized use requirement to improve the flexibility and application range of cold/hot-rolled excess materials.

In a possible implementation of the first aspect, determining a matching weight for each matching pair in the at least one matching pair according to preset matching priority information, comprises:

determining, a priority level of a futures contract in each matching pair of the at least one matching pair, according to preset matching priority information;
determining a matching weight of each matching pair in the at least one matching pair, according to the priority level and weight of a cold/hot-rolled excess material in each matching pair.

In a possible implementation of the first aspect, the rule of use includes at least one of the following: rule of a specification type, rule of a surface type, rule of a performance and process type, rule of a management type, and rule of a component type.

In a possible implementation of the first aspect, the matching priority information includes priority content and priority level, and includes at least one of the following: contract priority information, material priority information, and adaptation priority information.

In a possible implementation of the first aspect, computing the matching relationship graph based on a binary graph maximum weight matching algorithm, to obtain a use solution between the multiple futures contract and the multiple cold/hot-rolled excess materials, comprises:
computing the matching relationship graph based on a binary graph maximum weight matching algorithm based on preset constraint conditions, to obtain a use solution between the multiple futures contract and the multiple cold/hot-rolled excess materials.

In this implementation, the constraint conditions are set for computing the matching relationship graph, to make the use solution meet the user's expectation. For example, if the user wants there is no excess material generated after use of cold/hot-rolled excess materials, the contract process deficiency weight constraints can be set.

In a possible implementation of the first aspect, computing the matching relationship graph based on a binary graph maximum weight matching algorithm based on preset constraint conditions, comprises:

determining at least one matching group in the at least one matching pair consisting of a futures contract and a cold/hot-rolled excess material in the matching relationship graph based on the binary graph maximum weight matching algorithm, according to preset constraint conditions;
updating a material deficiency weight in a corresponding futures contract based on a cold/hot-rolled excess material of each matching group in the at least one matching group;
removing the at least one matching group and each cold/hot-rolled excess material in the at least one matching group from the matching relationship graph, and using changed matching relationship graph as a new matching relationship graph;
repeating process of computing the matching relationship graph until no matching pair consisting of a futures contract and a cold/hot-rolled excess material exist in the matching relationship graph.

In this implementation, the binary graph maximum weight matching algorithm is used to compute matching relationship graph iteratively. Because the algorithm can only produce one-to-one corresponding solution of a futures contract and a cold/hot-rolled excess material at one time, in order to obtain multiple sets of solutions for a futures contract and several cold/hot-rolled excess materials, the matched cold/hot-rolled excess materials are removed from the graph after a set of solution is obtained, and then the new graph can be computed. Thus, a complete solution can be obtained to avoid missing the possible solution.

In a possible implementation of the first aspect, after removing the at least one matching group and each cold/hot-rolled excess material in the at least one matching group from the matching relationship graph, the method further comprises:

performing weight inspection on each remaining matching pair in the matching relationship graph, retaining matching pairs that meet a weight inspection rule, and removing matching pair that don't meet the weight inspection rule.

In this implementation, after the matched cold/hot-rolled excess materials are removed from the graph, matching degree between remained cold/hot-rolled excess materials and futures contracts is checked again. The deletion of the matched cold/hot-rolled excess materials may make the originally matched futures contracts and cold/hot-rolled excess materials remain unmatched, so there is a need to check again, avoiding an incorrect solution because of incorrect match in the matching relationship graph.

In a possible implementation of the first aspect, the constraint conditions include at least one of the following: a matching quantity constraint, a contract process deficiency weight constraint, a use rule constraint, and a decision variable value constraint.

In this method, multiple futures contracts and multiple cold/hot-rolled excess materials with same steel grade are obtained. These futures contracts and cold/hot-rolled excess materials can be used as nodes in a weighted binary graph, to form at least one matching pair, constructing a matching relationship graph, where the at least one matching pair consists of a futures contract and a cold/hot-rolled excess material. In addition, a matching weight of each matching pair is determined. Then, the weighted binary graph is computed based on a (binary graph) maximum weight matching algorithm to obtain the final use solution. By doing so, the automation and scale of cross-process use of cold/hot-rolled excess materials can be implemented, the use efficiency of cold/hot-rolled excess materials and futures contract can be improved, and the optimal use of excess materials can be achieved. In addition, the method can also have better adaptability and more lasting vitality to the dynamic optimization tendency and demand in steel production, effectively reduce the enterprise inventory, shorten the delivery time of futures contracts, and reduce steelmaking applications and spot goods.

In a second aspect, an embodiment of this disclosure provides an apparatus for for cross-process use of cold/hot-rolled excess materials, comprising:

an obtaining unit, configured to obtain multiple futures contracts and multiple cold/hot-rolled excess materials with same steel grade, wherein the multiple cold/hot-rolled excess materials are used as deficient materials of corresponding processes in the multiple futures contracts;

a matching relationship graph determining unit, configured to form at least one matching pair consisting of a futures contract and a cold/hot-rolled excess material by taking the multiple futures contracts and the multiple cold/hot-rolled excess materials as nodes in a weighted binary graph, to construct a matching relationship graph between the multiple futures contracts and the multiple cold/hot-rolled excess materials, and determining a matching weight of each matching pair in the at least one matching pair;

a use solution generating unit, configured to compute the matching relationship graph based on a binary graph maximum weight matching algorithm, to obtain a use solution between the multiple futures contract and the multiple cold/hot-rolled excess materials, wherein in the use solution, a matched cold/hot-rolled excess material is associated with a futures contract, and a maximum sum of matching weights of the at least one matching pair is obtained.

In a possible implementation of the second aspect, the matching relationship graph determining unit comprises:

a rule of use determining sub-unit, configured to determine a rule of use, wherein the rule of use is used to check whether the multiple futures contracts match the multiple cold/hot-rolled excess materials;

a matching pair generating sub-unit, configured to form at least one matching pair consisting of a futures contract and a cold/hot-rolled excess material which meet the rule of use preset, by taking the multiple futures contracts and the multiple cold/hot-rolled excess materials as nodes in a weighted binary graph.

In a possible implementation of the second aspect, in the matching relationship graph determining unit, determining a matching weight of each matching pair in the at least one matching pair, comprises:

determining a matching weight for each matching pair in the at least one matching pair according to preset matching priority information, wherein the matching priority information is used to describe a matching quality between the multiple futures contracts and the multiple cold/hot-rolled excess materials.

In a possible implementation of the second aspect, in the matching relationship graph determining unit, determining a matching weight for each matching pair in the at least one matching pair according to preset matching priority information, comprises:

determining, a priority level of a futures contract in each matching pair of the at least one matching pair, according to preset matching priority information;

determining a matching weight of each matching pair in the at least one matching pair, according to the priority level and weight of a cold/hot-rolled excess material in each matching pair.

In a possible implementation of the second aspect, in the matching relationship graph determining unit, the rule of use includes at least one of the following: rule of a specification type, rule of a surface type, rule of a performance and process type, rule of a management type, and rule of a component type.

In a possible implementation of the second aspect, in the matching relationship graph determining unit, the matching priority information includes priority content and priority level, and includes at least one of the following: contract priority information, material priority information, and adaptation priority information.

In a possible implementation of the second aspect, in the use solution generating unit, computing the matching relationship graph based on a binary graph maximum weight matching algorithm, to obtain a use solution between the multiple futures contract and the multiple cold/hot-rolled excess materials, comprises:

computing the matching relationship graph based on a binary graph maximum weight matching algorithm based on preset constraint conditions, to obtain a use solution between the multiple futures contract and the multiple cold/hot-rolled excess materials.

In a possible implementation of the second aspect, in the use solution generating unit, computing the matching relationship graph based on a binary graph maximum weight matching algorithm based on preset constraint conditions, comprises:

determining at least one matching group in the at least one matching pair consisting of a futures contract and a cold/hot-rolled excess material in the matching relationship graph based on the binary graph maximum weight matching algorithm, according to preset constraint conditions;

updating a material deficiency weight in a corresponding futures contract based on a cold/hot-rolled excess material of each matching group in the at least one matching group;

removing the at least one matching group and each cold/hot-rolled excess material in the at least one matching group from the matching relationship graph, and using changed matching relationship graph as a new matching relationship graph;

repeating process of computing the matching relationship graph until no matching pair consisting of a futures contract and a cold/hot-rolled excess material exist in the matching relationship graph.

In a possible implementation of the second aspect, the apparatus further comprises:

a weight inspection unit, configured to perform weight inspection on each remaining matching pair in the matching relationship graph, retaining matching pairs that meet a weight inspection rule, and removing matching pair that don't meet the weight inspection rule.

In a possible implementation of the second aspect, in the use solution generating unit, the constraint conditions include at least one of the following: a matching quantity constraint, a contract process deficiency weight constraint, a use rule constraint, and a decision variable value constraint.

In a third aspect, an embodiment of this disclosure provides a non-transitory computer-readable storage medium storing instructions, wherein when the instructions are executed on a computer, the instructions cause the computer to execute the method mentioned in the first aspect. For beneficial effects that can be achieved in the third aspect, reference may be made to beneficial effects of the method provided in any implementation of the first aspect, and details are not described herein again.

In a fourth aspect, an embodiment of this disclosure provides an electronic device, comprising:

a memory, configured to store instructions executed by one or more processors of the electronic device; and

a processor, which is one of processors of the electronic device, configured to execute the method mentioned in the first aspect. For beneficial effects that can be achieved in the fourth aspect, reference may be made to the beneficial effects of the method provided in any implementation of the first aspect, and details are not described herein again.

In a fifth aspect, an embodiment of this disclosure provides a computer program product comprising computer programs/instructions, wherein the computer programs/instructions are executed by a processor to implement the method mentioned in the first aspect. For beneficial effects that can be achieved in the fifth aspect, reference may be made to the beneficial effects of the method provided in any implementation of the first aspect, and details are not described herein again.

## Brief Description of the Drawings

FIG. 1 shows a schematic scenario diagram of cross-process use of cold/hot-rolled excess materials according to some embodiments of this disclosure.

FIG. 2 shows a hardware structural diagram of an electronic device according to some embodiments of this disclosure.

FIG. 3 shows a schematic flow diagram of a method for cross-process use of cold/hot-rolled excess materials according to some embodiments of this disclosure.

FIG. 4 shows a schematic diagram of example of a matching relationship graph between cold/hot-rolled excess materials and futures contracts according to some embodiments of this disclosure.

FIG. 5 shows a schematic flow diagram of a method for determining matching pairs in a matching relationship graph according to some embodiments of this disclosure.

FIG. 6 shows a schematic flow diagram of a method for determining matching weights of matching pairs based on matching priority information according to some embodiments of this disclosure.

FIG. 7 shows a schematic flow diagram of a method for computing a matching relationship graph by using a binary graph maximum weight matching algorithm according to some embodiments of this disclosure.

FIG. 8(a) to FIG. 8(f) show schematic diagrams of changes of a matching relationship graph in a process of computing the matching relationship graph according to some embodiments of this disclosure.

FIG. 9 shows a schematic structural diagram of a System on Chip (SoC) according to some embodiments of this disclosure.

## Detailed Description

Embodiments of this disclosure will be described in detail with reference to the drawings.

Steel production is a typical long-term industry. Main production processes include iron-making, steel-making, hot rolling, and cold rolling. The cold rolling process is a finished process in steel production. Hot-rolled coils produced in the hot rolling process may be processed into cold-rolled coils after the cold-rolling process, such as acid washing, cold rolling mill, continuous annealing, and hot-dip galvanizing. The cold-rolled coils are high-value-added products, which are mainly used to produce high-end products such as automotive boards, electrical steels, and household electrical boards.

In hot rolling and cold rolling processes of a steel production, a plurality of excess materials that don't belong to contracts may be generated, such as hot rolling process excess materials, acid washing process excess materials, hard rolling process excess materials, hot-dip galvanizing process excess materials, and annealing process excess materials. To reduce excess materials, the excess materials may be matched to futures contracts to make use of the contract excess materials in iron and steel enterprises.

In futures contracts, there are requirements for multiple excess materials. For example, requirements for slabs, hot-rolled coils, acid washing coils, cold-rolled coils, and annealing coils are included in a futures contract A. Requirements for slabs, hot-rolled coils, acid washing coils, cold-rolled coils, and hot-dip galvanizing coils are included in a futures contract B. Therefore, proper excess materials may be matched to corresponding processes in futures contracts. Because there are requirements for the same excess material in multiple futures contracts, how to match excess materials to futures contracts may be considered. For example, a requirement for acid washing coils exists in both futures contract A and futures contract B. Therefore, there is a need to determine matching acid washing excess materials to futures contract A or futures contract B. Because there are multiple possibilities for matching the excess materials to the futures contracts, improper matching methods may affect material requirements required in a front process of the futures contracts, cause regenerated materials, and also affect logistics balance of a back process of futures contracts.

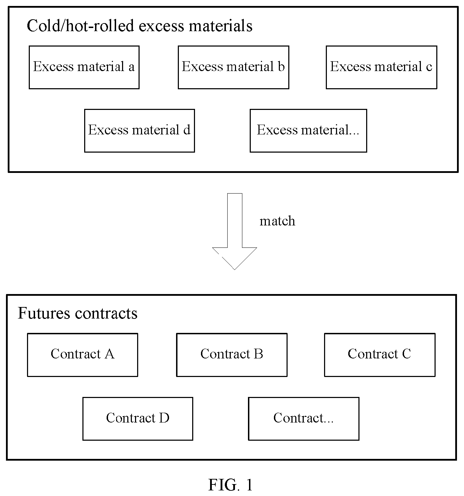

FIG. 1 shows a schematic scenario diagram of the cross-process use of cold/hot-rolled excess materials. As shown in FIG. 1, excess materials a, b, c, d, ... are cold/hot-rolled excess materials generated in hot rolling or cold rolling processes. Contracts A, B, C, D, ... are futures contracts. Multiple types of cold/hot-rolled excess materials may be matched to futures contracts. In the matching process, corresponding matching rules may be met, so that the match between excess materials and contracts is globally optimal.

In the prior art, cold/hot-rolled excess materials and futures contracts are matched in an artificial experience-based manner. So the working efficiency is low and error-prone, and global optimization is difficult to be achieved. The artificial experience manner may be performed according to historical data of the matching between cold/hot-rolled excess materials and futures contracts, as well as subjective judgment.

Therefore, as shown in FIG. 1, this disclosure provides a method of cross-process use of cold/hot-rolled excess materials, which is applied to an electronic device. The electronic device is configured to perform matching between cold/hot-rolled excess materials and futures contracts, to obtain a final use solution of cold/hot-rolled excess materials. In this method, multiple futures contracts and multiple cold/hot-rolled excess materials with same steel grade are obtained.

These futures contracts and cold/hot-rolled excess materials can be used as nodes in a weighted binary graph, to form at least one matching pair, constructing a matching relationship graph, where the at least one matching pair consists of a futures contract and a cold/hot-rolled excess material. In addition, a matching weight of each matching pair is determined. Then, the weighted binary graph is computed based on a (binary graph) maximum weight matching algorithm to obtain the final use solution. By doing so, the automation and scale of cross-process use of cold/hot-rolled excess materials can be implemented, the use efficiency of cold/hot-rolled excess materials and futures contract can be improved, and the optimal use of excess materials can be achieved. In addition, the method can also have better adaptability and more lasting vitality to the dynamic optimization tendency and demand in steel production, effectively reduce the enterprise inventory, shorten the delivery time of futures contracts, and reduce steelmaking applications and spot goods.

In this disclosure, the terms "first", "second", and the like are used only to distinguish descriptions, and are not understood to indicate or imply relative importance.

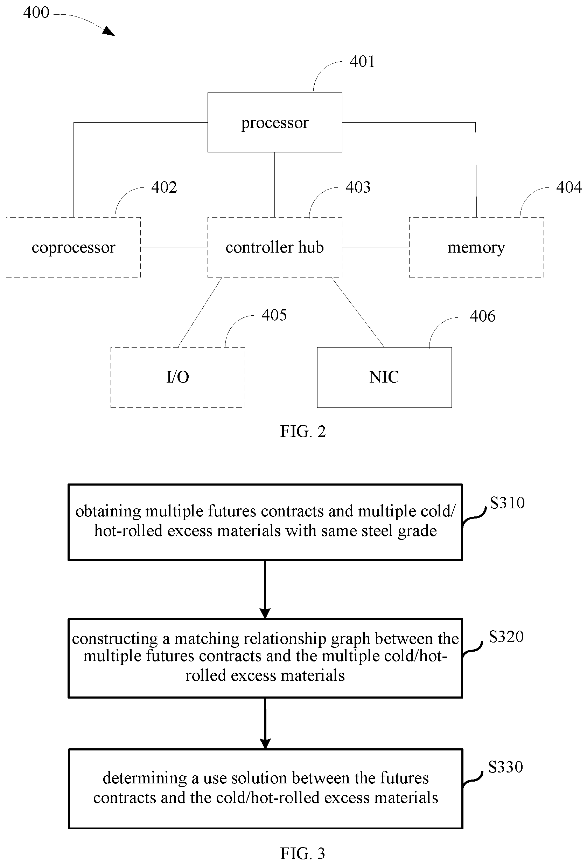

Referring to FIG. 2, FIG. 2 shows a hardware structural diagram of an electronic device 400. As a control device in this disclosure, the electronic device 400 may be a desktop computer device, a notebook computer device, a flat computing device, a mobile terminal, or the like.

The electronic device 400 may include one or more processors 401 coupled to the controller hub 403. For at least one embodiment, the controller hub 403 communicates with the processor 401 by using a multi-branch bus such as a Front Side Bus (FSB), a point-to-point interface such as a Quick Path Interconnect (QPI), or similar connections. The processor 401 executes an instruction for controlling a data processing operation of a general type. In an embodiment, the controller hub 403 includes, but is not limited to, a Graphics & Memory Controller Hub (GMCH) (not shown) and an Input Output Hub (IOH) (which may be on separate chips) (not shown), where the GMCH includes a memory and a graphics controller, and is coupled to the IOH.

The electronic device 400 may further include a coprocessor 402 and a memory 404 coupled to the controller hub 403. Alternatively, one or both of the memory and the GMCH may be integrated into a processor (as described in this disclosure). The memory 404 and the coprocessor 402 are directly coupled to the processor 401 and the controller hub 403, and the controller hub 403 and the IOH are in a single chip.

The memory 404 may be, for example, a Dynamic Random Access Memory (DRAM), a Phase Change Memory (PCM), or a combination thereof. The memory 404 may include one or more tangible, non-temporary computer readable media for storing data and/or instructions.

The computer readable storage medium stores an instruction. Specifically, a temporary and permanent copy of the instruction is stored. The instruction may include: an instruction, when the instruction is executed by at least one of the processors, the instruction may cause the electronic device 400 to implement a method of cross-process use of cold/hot-rolled excess materials according to this disclosure. When the instruction runs on a computer, the computer performs the foregoing method of cross-process use of cold/hot-rolled excess materials according to this disclosure.

In an embodiment, the coprocessor 402 can be a dedicated processor, such as a high throughput Many Integrated Core (MIC) processor, a network or communication processor, a compression engine, a graphics processor, a general-purpose computing on graphics processing units (GPGPU), or an embedded processor. The optional nature of the coprocessor 402 is represented by a dashed line in FIG. 2.

In an embodiment, the electronic device 400 may further include a Network Interface Controller (NIC) 406. The NIC 406 may include a transceiver configured to provide a radio interface for the electronic device 400 to communicate with any other suitable device (e.g., front-end module, antenna, etc.). In various embodiments, the NIC 406 may be integrated with other components of the electronic device 400. The NIC 406 may implement a function of the communications unit in the foregoing embodiment.

The electronic device 400 may further include an Input/Output (I/O) device 405. The I/O device 405 may include a user interface, which is designed to enable the user to interact with the electronic device 400; a peripheral component interface, which is designed to enable the peripheral component to interact with the electronic device 400; and/or a sensor, which is designed to determine environmental conditions and/or location information related to the electronic device 400.

It should be noted that FIG. 2 is merely an example. Although FIG. 2 shows that the electronic device 400 includes multiple components such as the processor 401, the controller hub 403, and the memory 404, in actual application, the device of this disclosure may include only a part of the components of the electronic device 400. For example, the device of this disclosure may only include the processor 401 and a NIC 406. The properties of the optional component in FIG. 2 are shown by dashed lines.

FIG. 3 shows a schematic flow diagram of a method for cross-process use of cold/hot-rolled excess materials according to some embodiments of this disclosure. With reference to FIG. 3, the following describes this method in detail.

As shown in FIG. 3, the method for cross-process use of cold/hot-rolled excess materials in this disclosure includes the following steps:

S310: obtaining multiple futures contracts and multiple cold/hot-rolled excess materials with same steel grade.

In some embodiments, futures contracts and cold/hot-rolled excess materials have corresponding steel grades. According to the technical knowledge related to steel production, steel with different steel grades has different chemical composition and mechanical indexes. Therefore, futures contracts and cold/hot-rolled excess materials with different steel grades cannot be matched. Only cold/hot-rolled excess materials whose steel grade is the same with that of futures contracts can be used in futures contracts.

In some embodiments of this disclosure, futures contracts and cold/hot-rolled excess materials may be grouped according to steel grades. In each group, futures contracts and cold/hot-rolled excess materials have same steel grade. There may be multiple futures contracts and multiple cold/hot-rolled excess materials in each group, and the cold/hot-rolled excess materials in the group may be used in futures contracts in the group. After all futures contracts and cold/hot-rolled excess materials are divided into multiple groups, multiple futures contracts and multiple cold/hot-rolled excess materials in each group can be matched.

The futures contracts may include steel requirements of multiple processes. For example, futures contract A includes five processes: steelmaking, hot rolling, acid washing, cold rolling, and annealing, and each process has a corresponding steel deficiency weight. The cold/hot-rolled excess materials are the superfluous steel materials corresponding to one process. For example, cold/hot-rolled excess material a is superfluous steel material corresponding to the acid washing process. The cold/hot-rolled excess materials are used as deficient steel of the corresponding process in futures contracts when a matching condition is met. For example, the cold/hot-rolled excess material a may be matched to the futures contract A when the matching condition is met, and the excess material a can be used as the deficient steel of the acid washing process in the futures contract A.

The futures contracts include contract information and process-related information, and the process-related information of the futures contracts may include but is not limited to: process number, process name, process feed rate, process deficiency weight. The process number is used to describe the sequence of different processes in the futures contracts. The process name is used to describe the name corresponding to each process, such as "01-steelmaking" and "07-acid washing". The process feed rate is used to describe the input-output ratio of the process. For example, "1.036" indicates that the weight ratio of the input material to the output material is 1.036. The process deficiency weight is used to describe the weight of material required by the corresponding process. For example, if the deficiency weight of a process is 32.69 tons, and the corresponding process is a steelmaking process, it indicates that weight of material required by the steelmaking process is 32.69 tons.

The information about the cold/hot-rolled excess materials may include but is not limited to: process, weight, name, and type. The process is the process corresponding to the cold/hot-rolled excess materials, for example, "04-hot rolling". The weight is the weight of the excess materials. The material name is the name of excess materials generated by a process, such as "hot-rolled coils" and "acid washing coils". The type is the type of excess materials generated by a process, for example, "hot-rolled coils" and "cold-rolled coils".

S320: constructing a matching relationship graph between multiple futures contracts and multiple cold/hot-rolled excess materials.

The matching relationship graph is used to describe matching relationships between multiple futures contracts and multiple cold/hot-rolled excess materials, which is, cold/hot-rolled excess materials may be matched to which futures contract, and the futures contracts may include which cold/hot-rolled excess material. In the matching relationship between multiple futures contracts and multiple cold/hot-rolled excess materials, one cold/hot-rolled excess material corresponds to only one futures contract, while one futures contract may correspond to multiple cold/hot-rolled excess materials.

In some embodiments of this disclosure, a weighted binary graph in graph theory can be used to represent the matching relationship graph. The weighted binary graph is a special model in graph theory, and nodes in the weighted binary graph may be divided into two disjoint subsets. Two nodes associated with each edge in the weighted binary graph respectively belong to two different subsets, and edges in the weighted binary graph have different weights.

In this disclosure, multiple futures contracts and multiple cold/hot-rolled excess materials are respectively used as nodes in the weighted binary graph, and there is possible matching relationships between multiple futures contracts and multiple cold/hot-rolled excess materials. There is at least one possible matching relationship between multiple futures contracts and multiple cold/hot-rolled excess materials. Generally, there are multiple possible matching relationships. One futures contract and one cold/hot-rolled excess material in a possible matching relationship may be taken as one matching pair. Therefore, there may be at least one such matching pair between the multiple futures contracts and the multiple cold/hot-rolled excess materials. Therefore, the weighted binary graph also includes at least one such matching pair. In addition, there are good and bad matching relationships. A matching relationship between a futures contract and a cold/hot-rolled excess material may be described by using different values of weights. In detail, matching weight of a matching pair can be used to describe the matching degree of futures contract and cold/hot-rolled excess material in the matching pair.

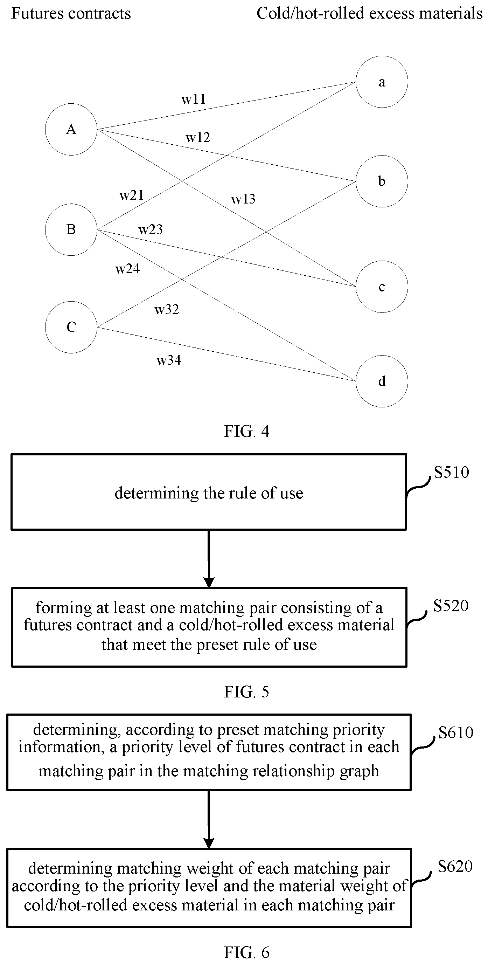

FIG. 4 shows a schematic diagram of example of a matching relationship graph between cold/hot-rolled excess materials and futures contracts. As shown in FIG. 4, three futures contracts and four cold/hot-rolled excess materials are respectively used as nodes in a binary graph, and there are eight possible matching relationships between futures contracts A, B, C and cold/hot-rolled excess materials a, b, c, d. That is to say, there are 8 matching pairs in this matching relationship graph, e.g., <A, b>, <A, c>. The matching pairs may be represented by lines between the futures contracts and the cold/hot-rolled excess materials in FIG. 4. The matching weights of the matching pairs may be represented by weights of lines in FIG. 4. For example, the matching weight of the matching pair <A, a> is w11, the matching weight of the matching pair <B, c> is w23, the matching weight of the matching pair <C, d> is w34.

In some embodiments of this disclosure, in order to determine at least one matching pair in the matching relationship graph, the rule of use may first be determined, and then a futures contract and a cold/hot-rolled excess material that meet the rule can be taken as a matching pair. Therefore, there may be at least one matching pair in the matching relationship graph. FIG. 5 shows a schematic flow diagram of a method for determining matching pairs in the matching relationship graph. As shown in FIG. 5, the method may include the following steps:

S510: determining the rule of use.

The rule is used to determine whether a futures contract and a cold/hot-rolled excess material can be matched, and is a preset condition. If a futures contract and a cold/hot-rolled excess material can meet the rule, there is a possible matching relationship between the futures contract and the cold/hot-rolled excess material. That is to say, the futures contract and the cold/hot-rolled excess material can be matched. If the futures contract and the cold/hot-rolled excess material do not meet the rule, there is no matching relationship between the futures contract and the cold/hot-rolled excess material. That is to say, the futures contract and the cold/hot-rolled excess material cannot be matched. Specifically, a Boolean value may be used to indicate a matching situation. For example, TRUE indicates that a matching may be performed, and FALSE indicates that a matching may not be performed.

There may be multiple types of rules for determining whether futures contracts and cold/hot-rolled excess material can be matched from different perspectives. Specifically, the rule may include but is not limited to the following several types: rule of a specification type, rule of a surface type, rule of a performance and process type, rule of a management type, and rule of a component type. The rule of a specification type determines the matching degree of a futures contract and a cold/hot-rolled excess material from the perspective of specifications. The determination criteria may include but is not limited to: steel grade, length, width, thickness, and weight. The rule of a surface type determines the matching degree of a futures contract and a cold/hot-rolled excess material from the perspective of the external surface of materials. The determination criteria may include but is not limited to: classification level, coating type, and oil coating. The rule of a performance and process type determines the matching degree of a futures contract and a cold/hot-rolled excess material from the perspective of performance and process. The determination criteria may include but is not limited to: yield strength, tensile strength, hardness, and extension. The rule of a management type determines the matching degree of a futures contract and a cold/hot-rolled excess material from the perspective of management. The determination criteria may include but is not limited to: material status, contract status, factory location and warehouse region, and finished product marking. The rule of a component type determines the matching degree of a futures contract and a cold/hot-rolled excess material from the perspective of material component. The determination criteria may include but is not limited to: element components such as C, AL, MN, P, and S.

For example, a simple rule may be described as follows:

If (Contract information. Contract status >= 33 && Contract information. Contract status <= 49)
return TRUE;
ELSE
return FALSE;

The meaning expressed in this rule is that if the contract status of a futures contract is between 33 and 49, the futures contract can be matched to a cold/hot-rolled excess material; otherwise, the futures contract cannot be matched to a cold/hot-rolled excess material.

In some embodiments of this disclosure, the rule can be implemented in a configurable manner. Because the cold/hot-rolled excess materials are closer to the finished product process, and lack of subsequent remediation and improvement measures, requirements for matching in terms of quality, surface, performance, and process are more stringent. In addition, the rule changes frequently. If the rule is cured into a software system in a form of hard coding, it is inconvenient to adjust the rule, and it is difficult to ensure time efficiency of change of the rule. Therefore, a configurable implementation manner is provided for the rule, so that operations such as adding, deleting, or changing the rule can be conveniently implemented without modifying software code. What's more, the operations may takes effect immediately. By doing so, the flexibility is improved, and requirements for a flexible adjustment of the rule is well met.

S520: forming at least one matching pair consisting of a futures contract and a cold/hot-rolled excess material that meet the preset rule of use.

In some embodiments, a futures contract and a cold/hot-rolled excess material that meet a preset rule can be used as a matching pair. There is at least one matching pair of futures contracts and cold/hot-rolled excess materials that meet the rule. Therefore, the matching relationship graph includes at least one matching pair.

In some embodiments of this disclosure, matching weights of each matching pair in the at least one matching pair in the matching relationship graph can be determined based on preset matching priority information. A larger matching weight indicates a higher matching possibility of a futures contract and a cold/hot-rolled excess material in a matching pair. The matching priority information is preset, and may be used to describe a matching degree between a futures contract and a cold/hot-rolled excess material.

In some embodiments of this disclosure, the matching priority information may include but is not limited to one or more of contract priority information, material priority information, and adaptation priority information. The contract priority information includes information related to basic attributes of a futures contract, such as a due date and an export mark. In addition, the contract priority information may further include information such as dynamically specifying priority processing of a type of contract. The material priority information includes information related to material attributes, for example, storage time, and finished product mark. The adaptation priority information includes information related to parameters of futures contracts and materials, such as switching loss, warehouse transfer, and contract integrity.

In some embodiments of this disclosure, the matching priority information includes priority content and priority level. The priority content includes combination of attributes or process parameters of the futures contracts. For example, priority content of a futures contract is "color coating export contract last month". The priority content is composed of such parameters as "delivery date = last month" + "variety class = color coating" + "export mark = export contract". The priority level is used to indicate importance of priority content. For specific implementation, a number may be used. For example, level 1 is a highest priority, and level 2 is a second priority. By adjusting the priority content and the priority setting, personalized requirements (e.g., specific product lines or specific types of futures contracts are preferentially processed) caused by a production fluctuation and a special management requirement can be considered, and the flexibility and applicable range can be improved, so that dynamic setting of matching priority information is implemented, and requirements for dynamically adjusting matching priority information can be met.

Specifically, multiple pieces of priority content and priority levels may be defined according to service requirements and inclination, to form a matching priority definition table, and an operation of adding, deleting, or changing matching priority information is supported by modifying data in the matching priority definition table. A typical contract priority definition table is shown in Table 1 below:

Table 1 Contract priority definition table

| Priority level | Priority content | Process parameter 1 | Relationship | Parameter value 1 | Process parameter 2 | Relationship | Parameter value 2 |
|---|---|---|---|---|---|---|---|
| 1 | Export contract two month ago | Delivery date | Equal to | Contract two month ago | Export mark | Equal to | Export contract |
| 2 | General contract two month ago | Delivery date | Equal to | Contract two month ago | Export mark | Equal to | Ordinary contract |
| 3 | Contract for the C101 unit after acid washing | BACKLOG 7th bit | Equal to | 1 | | | |
| 4 | Color coating contract last month | Delivery date | Equal to | Contract last month | Variety category | Equal to | O |
| 5 | Coating code 10 | Coating Code Differentiation | Equal to | 10 | | | |
| 6 | ... | ... | ... | ... | ... | ... | ... |

The matching weight may be used to describe a comprehensive level of contract priority information, material priority information, and adaptation priority information.

In some embodiments of this disclosure, a matching weight of a matching pair is determined according to the matching priority information can be that, a matching weight of a matching pair is determined according to the matching priority information of a futures contract and the weight of a cold/hot-rolled excess material in the matching pair. FIG. 6 shows a schematic flow diagram of a method for determining a matching weight according to matching priority information. As shown in FIG. 6, the method may include the following steps:

S610: determining, according to preset matching priority information, a priority level of futures contract in each matching pair in the matching relationship graph.
S620: determining matching weight of each matching pair according to the priority level and the material weight of cold/hot-rolled excess material in each matching pair.

The following uses contract priority information as an example for description. For a futures contract A, process parameters included in the futures contract A is compared with priority content in a preset priority definition table (e.g., Table 1) to determine a corresponding priority level. If the futures contract A meets multiple priority-related definitions in the priority definition table at the same time, the highest priority level corresponding to the multiple priority-related definitions is used as the priority level of the futures contract A. If the futures contract A does not match any priority definition in the priority definition table, the priority level is set to a level which is equal to the maximum priority level in the priority definition table plus 1. The way of determining the priority level of the futures contracts according to the material priority information and the adaptation priority information is the same as that according to contract priority information.

After the priority levels corresponding to futures contracts are determined, the matching weights are determined according to the priority levels and the material weights of the cold/hot-rolled excess materials. For ease of description, a formal description of a cross-process use of cold/hot-rolled excess material is as follows:

Suppose the total number of futures contracts is M. N is the total number of cold/hot-rolled excess materials. I is index of the futures contracts, i = 1,..., M. J is the index of the cold/hot-rolled excess materials, j=1,..., N. $w_{ij}$ indicates the matching weight of the futures contract i and the cold/hot-rolled excess material j. $W_j$ indicates the material weight of the cold/hot-rolled excess material j. $p_i^o$ indicates a priority level of the futures contract i corresponding to the contract priority information. $p_j^m$ indicates a priority level corresponding to the material priority information. $p_{ij}^f$ indicates a priority level corresponding to the adaptation priority information. The following formula may be used to calculate the matching weight:

$$w_{ij} = \frac{1}{p_i^o} \times \frac{1}{p_j^m} \times \frac{1}{p_{ij}^f} \times W_j$$

Because the lower the value of a priority level corresponding to the contract priority information, the material priority information, and the adaptation priority information is, the higher the priority degree is, and the higher a matching weight is. Correct conversion may be implemented by using the foregoing formula. The larger the matching weight is, the more a futures contract matches a cold/hot-rolled excess material. The cold/hot-rolled excess material may be matched to the futures contract first.

S330: determining a use solution between the futures contracts and the cold/hot-rolled excess materials.

In some embodiments, the final use solution can be obtained by computing the weighted binary graph based on a maximum weight matching algorithm. The use solution may include at least one matching pair that successfully matches. And usually, the use solution includes multiple matching pairs, with each pair including a futures contract and a cold/hot-rolled excess material. In addition, a cold/hot-rolled excess material is matched to at most one futures contract. One futures contract may match cold/hot-rolled excess materials, or may not match cold/hot-rolled excess materials. If a futures contract matches the cold/hot-rolled excess materials, the futures contract may match at least one cold/hot-rolled excess material. In addition, the object of maximizing the sum of the matching weights of all matching pairs, is determined by the optimization objective set when the matching relationship graph is computed based on the maximum weight matching algorithm. The optimization objective is used to describe an optimization direction when the matching relationship graph is computed.

In some embodiments of this disclosure, the matching relationship graph is computed based on the maximum weight matching algorithm according to a preset constraint condition, to obtain a use solution between futures contracts and cold/hot-rolled excess materials. The constraint condition includes the constraint condition to be followed when computing the matching relationship graph.

In some embodiments of this disclosure, the constraint condition may include but is not limited to one or more of a matching quantity constraint, a contract process deficiency weight constraint, a use rule constraint, and a decision variable value constraint.

In some embodiments, the decision variable is defined as $x_{ij}$, indicating whether the futures contract i matches the cold/hot-rolled excess material j. $x_{ij}=1$ indicates that the cold/hot-rolled excess material j matches the futures contract i, and $x_{ij}=0$ indicates that there is no matching relationship between the cold/hot-rolled excess material j and the futures contract i.

The total number of processes for the futures contract i will be defined as $K_i$. k is the process index of the futures contract i, k = 1, ... ,$K_i$. $S_{ik}$ indicates the set of cold/hot-rolled excess materials whose process is the same as the k th process in the futures contract i. That is to say, if $j \in S_{ik}$, it indicates that the process corresponding to the cold/hot-rolled excess material j is the same as the k th process in the futures contract i. $D_{ik}$ indicates the material deficiency weight in the k th process of the futures contract i. $y_{ik}$ indicates the cumulative feed rate of the futures contract i from the steelmaking process to the k th process, which is equal to the product of the feed rate of each process. $r_{ij}$ is the matching identifier of the futures contract i and the cold/hot-rolled excess material j. When the two sides can be matched, $r_{ij}=1$; otherwise, $r_{ij}=0$.

The matching quantity constraint is used to indicate that one cold/hot-rolled excess material can only be matched to one futures contract, and it cannot be split and matched to different futures contracts. The matching quantity constraint can be represented by the following formula:

$$\sum_{i=1}^{M} x_{ij} \leq 1$$

In the formula, i=1,..., M, and j=1,..., N.

The contract process deficiency weight constraint can be used to indicate that the weight of a cold/hot-rolled excess material cannot exceed the material deficiency weight of corresponding process in the futures contract. The weight of a cold/hot-rolled excess material in the steelmaking process cannot exceed the material deficiency weight in the steelmaking process in the futures contract. And the weight of an excess material converted to the steelmaking process cannot exceed the deficiency weight in the steelmaking process in a futures contract. The objective of setting the contract process deficiency weight constraint is that there will be no other new excess materials after the cold/hot-rolled excess materials are used in the futures contracts. The following formula can be used to indicate the contract process deficiency weight constraint:

$$\sum_{j \in S_{ik}} W_j \cdot x_{ij} \leq D_{ik}$$

$$\sum_{j \in S_{ik}} W_j \cdot y_{ik} \cdot x_{ij} \leq D_{i1}$$

In this formula, i=1,..., M, and k=1,... $K_i$.

The use rule constraint is used to indicate that the futures contracts and the cold/hot-rolled excess materials can be matched only if the use rule is satisfied. Otherwise, the match cannot be performed. The following formula can be used to indicate the use rule constraint:

$$x_{ij} \leq r_{ij}$$

In this formula, i=1,..., M, and j=1,..., N.

The decision variable value constraint is used to indicate that the value of the decision variable can only be 0 or 1. That is, the cold/hot-rolled excess materials are matched to the futures contracts or are not matched to the futures contracts. The decision variable value constraint can be represented by the following formula:

$$x_{ij} \in \{0, 1\}$$

In this formula, i=1,..., M, and j=1,..., N.

In some embodiments of this disclosure, the optimization objective includes: maximizing the sum of matching weights between the futures contracts and the cold/hot-rolled excess materials. The optimization objective can be represented by the following formula:

$$\max \sum_{i=1}^{M} \sum_{j=1}^{N} w_{ij}\, x_{ij}$$

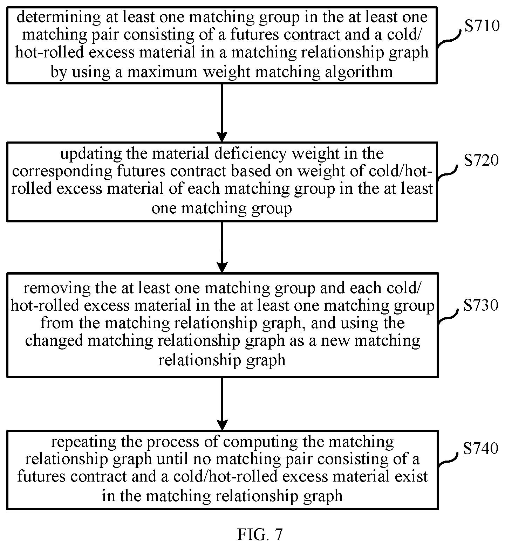

FIG. 7 shows a schematic flow diagram of a method for computing a matching relationship graph by using a maximum weight matching algorithm. As shown in FIG. 7, the method includes the following steps:
S710: determining at least one matching group in the at least one matching pair consisting of a futures contract and a cold/hot-rolled excess material in a matching relationship graph by using a maximum weight matching algorithm.

The futures contracts and cold/hot-rolled excess materials in matching result is in a one-to-one correspondence, with the matching result obtained by computing the matching relationship graph based on the maximum weight matching algorithm. In the matching result, each futures contract matches one cold/hot-rolled excess material, and each cold/hot-rolled excess material matches one futures contract. Each pair of successfully matched futures contract and cold/hot-rolled excess material forms a matching group, which includes one futures contract and one cold/hot-rolled excess material. The matching result includes at least one matching group. The matching result can satisfy the constraint that a cold/hot-rolled excess material can only match a futures contract. However, because a futures contract can match multiple cold/hot-rolled excess materials, the matching relationship graph may be computed multiple times.

S720: updating the material deficiency weight in the corresponding futures contract based on weight of cold/hot-rolled excess material of each matching group in the at least one matching group.

In some embodiments, it is assumed that a cold/hot-rolled excess material j matches a K th process of a futures contract i in the matching group, weight of the cold/hot-rolled excess material j is $W_j$, material deficiency weight of the k th process of the futures contract i is $D_{ik}$, and feed rate of the k th process of the futures contract i is $Z_{ik}$, the following formula can be used as a reference to update material deficiency weight in different processes in the futures contract i:

$$D_{ik} = \begin{cases} D_{ik} - W_j, & if \ k = K \\ D_{ik} - W_j * \displaystyle\prod_{i=k+1}^{K} z_{ik}, & if \ k < K \\ D_{ik}, & else \end{cases}$$

S730: removing the at least one matching group and each cold/hot-rolled excess material in the at least one matching group from the matching relationship graph, and using the changed matching relationship graph as a new matching relationship graph.

In some embodiments of this disclosure, after all matching groups and cold and cold/hot-rolled excess materials in the matching groups are removed from the matching relationship graph, weight inspection needs to be further performed on each remaining matching pair in the matching relationship graph. Matching pairs that meet a weight inspection rule is reserved, and matching pairs that don't meet the weight inspection rule may be removed. Due to a change in material deficiency weights required for different processes in multiple futures contracts in the matching relationship graph, weight inspection may be performed on cold/hot-rolled excess materials and futures contracts in matching pairs remaining in the matching relationship graph. If weight of a cold/hot-rolled excess material and deficiency weight of a corresponding in a futures contract don't meet the weight inspection rule, the corresponding matching pair including the cold/hot-rolled excess material and the futures contract may be removed. Otherwise, the matching pair may be reserved.

In some embodiments, the weight inspection rule may include a determining condition for weight of a cold/hot-rolled excess material in a matching pair and the material deficiency weights in different processes of a futures contract in the same matching pair. For example, the weight inspection rule may include that weight of a cold/hot-rolled excess material in a matching pair is lower than a material deficiency weight in a process which is the same as that of the cold/hot-rolled excess material of a futures contract in the matching pair. And weight of the cold/hot-rolled excess material converted to the steelmaking process is lower than material deficiency weight in the steelmaking process of the futures contract.

The remaining matching pairs are described in formal form to perform weight inspection of the cold/hot-rolled excess materials and futures contracts as follows:
In some embodiments, the weight of a cold/hot-rolled excess materials j in matching pair is $W_j$, and corresponding process is K. The material deficiency in the k th process of a futures contract i in the matching pair is $D_{ik}$. And the cumulative feed rate of the futures contract i from the steelmaking process to the K th process is $y_{iK}$. Assume that the weight inspection rule is defined as $W_j \leq D_{iK}$ && $W_j * y_{iK} \leq D_{i1}$. If the weight inspection rule is met, the matching pair can be reserved in the matching relationship graph, and the matching weight of the matching pair remains unchanged. Otherwise, the matching pair may be removed. The cold/hot-rolled excess materials j and the futures contract i in this matching pair may no longer be matched with each other.

S740: repeating the process of computing the matching relationship graph until no matching pair consisting of a futures contract and a cold/hot-rolled excess material exist in the matching relationship graph.

After determining the use solution between the futures contracts and the cold/hot-rolled excess materials, use solution between futures contracts and cold/hot-rolled excess materials in other different steel grades may be computed to obtain the corresponding use result. After use solutions of all steel grades are determined, the final use solutions can be delivered and executed. The cold/hot-rolled excess materials can be used in the corresponding futures contracts to become the contract materials. And subsequent processing is performed on these contract materials according to specified processes.

The following describes in detail, by using a specific example, the determination of a use solution between futures contracts and cold/hot-rolled excess materials. In this example, there are three futures contracts in total, and six cold/hot-rolled excess materials to be matched and used. Futures contracts and cold/hot-rolled excess materials have same steel grade. Table 2 below is a table of information on futures contracts, which shows the process number, process name, process feed rate, and process deficiency weight of each futures contract. Table 3 is a table of information on cold/hot-rolled excess materials. Table 4 is a matching weight table, which shows matching weight between the futures contracts and the cold/hot-rolled excess materials. In the Table 4, *"/"* indicates that the futures contracts and excess materials don't meet detection rule, so they cannot be matched. Therefore, there is no matching weight.

Table 2 Information on futures contracts

| Contract | Contract process information | | | | | |
|---|---|---|---|---|---|---|
| Contract 1 | Process No. | 1 | 2 | 3 | 4 | 5 |
| | Process name | 01-Steelmaking | 04-Hot Rolling | 07-Acid washing | 08-Cold Rolling | 10-Annealing |
| | Process feed rate | 1 | 1.015 | 1.036 | 1.023 | 1.013 |
| | Process deficiency weight/ ton | 32.69 | 32.21 | 31.09 | 30.39 | 30.00 |
| Contr act 2 | Process No. | 1 | 2 | 3 | 4 | 5 |
| | Process name | 01-Steelmaki ng | 04-Hot Rolling | 07-Acid washing | 08-Cold Rolling | 09-Hot-dip galvanizin g |
| | Process feed rate | 1 | 1.015 | 1.036 | 1.023 | 0.98 |
| | Process deficiency weight/ton | 37.29 | 36.74 | 45.11 | 44.10 | 45.00 |
| Contr act 3 | Process No. | 1 | 2 | 3 | 4 | 5 |
| | Process name | 01-Steelmaki ng | 04-Hot Rolling | 07-Acid washing | 08-Cold Rolling | 10-Annealing |
| | Process feed rate | 1 | 1.015 | 1.036 | 1.023 | 1.013 |
| | Process deficiency weight/ton | 32.97 | 32.48 | 31.35 | 30.65 | 50.00 |

Table 3 Information on cold/hot-rolled excess materials

| Excess materials | Corresponding process | Weight/ton | Material name | Excess materials type |
|---|---|---|---|---|
| 1 | 04-Hot Rolling | 20.60 | Hot rolling coil | Hot coil |
| 2 | 07-Acid washing | 10.08 | Acid washing coil | Cold coil |
| 3 | 08-Cold Rolling | 15.21 | Hard rolling coil | Cold coil |
| 4 | 09-Hot-dip galvanizing | 11.75 | Hot-dip galvanizing coil | Cold coil |
| 5 | 10-Annealing | 9.88 | Annealing coil | Cold coil |
| 6 | 10-Annealing | 10.16 | Annealing coil | Cold coil |

Table 4 Matching weights between futures contracts and cold/hot-rolled excess materials

| Matching weight | Excess material 1 | Excess material 2 | Excess material 3 | Excess material 4 | Excess material 5 | Excess material 6 |
|---|---|---|---|---|---|---|
| Contract 1 | 3.12 | 2.36 | 1.09 | / | 1.48 | 1.63 |
| Contract 2 | / | 3.57 | / | 2.83 | / | / |
| Contract 3 | / | / | 3.61 | / | / | 2.27 |

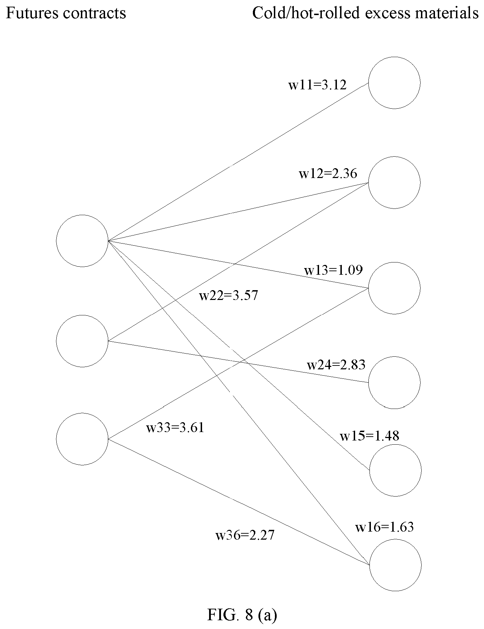

According to the foregoing information, an initial matching relationship graph shown in FIG. 8 (a) may be constructed based on the futures contracts and the cold/hot-rolled excess materials. And then multiple iterative calculation is performed by using the maximum weight matching algorithm to obtain the use solution of the futures contracts and the cold/hot-rolled excess materials. A specific calculation process is as follows:

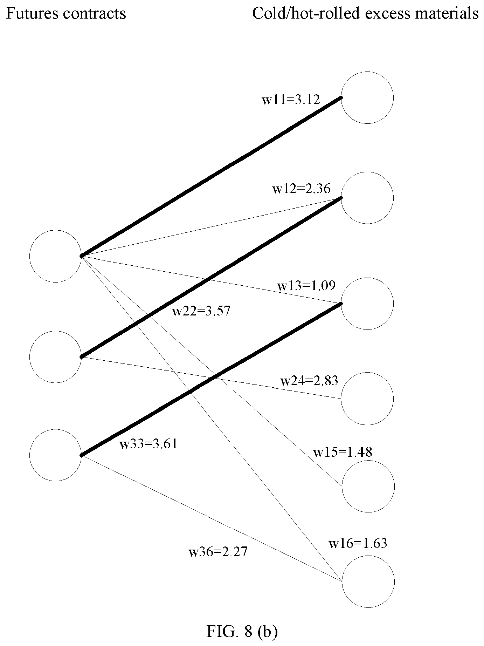

(1) The maximum weight matching algorithm can be used to compute the current matching relationship graph, to obtain three matching results shown by thick solid lines in FIG. 8(b), which are respectively: contract 1-excess material 1, contract 2-excess material 2, and contract 3-excess material 3. The matching results may be saved.
(2) Removing the matched excess materials 1, 2, and 3, and updating the corresponding contracts 1, 2, and 3. Take contract 1 as an example. The process corresponding to the excess material 1 is 04-hot rolling, with a weight of 20.60 tons. The excess material 1 is matched to the process 2 of contract 1, with process deficiency weight being 32.21 tons. The process deficiency weight of each process can be updated according to the formula:

$$D_{11} = D_{11} - W_1 * z_{12} = 32.69 - 20.60 * 1.015 = 11.78$$

$$D_{12} = D_{12} - W_1 = 32.21 - 20.60 = 11.61$$

$$D_{13} = D_{13} = 31.09$$

$$D_{14} = D_{14} = 30.39$$

$$D_{15} = D_{15} = 30.00$$

Similarly, process deficiency weight of each process in contract 2 and contract 3 can be updated. The results are shown in Table 5 below.

Table 5 Update results of the first iteration of contract deficiency weight

| Process deficiency weight/ton | 1 | 2 | 3 | 4 | 5 |
|---|---|---|---|---|---|
| Contract 1 | **11.78** | **11.61** | 31.09 | 30.39 | 30.00 |
| Contract 2 | **26.69** | **26.30** | **35.03** | 44.10 | 45.00 |
| Contract 3 | **16.61** | **16.36** | **15.79** | **15.44** | 50.00 |

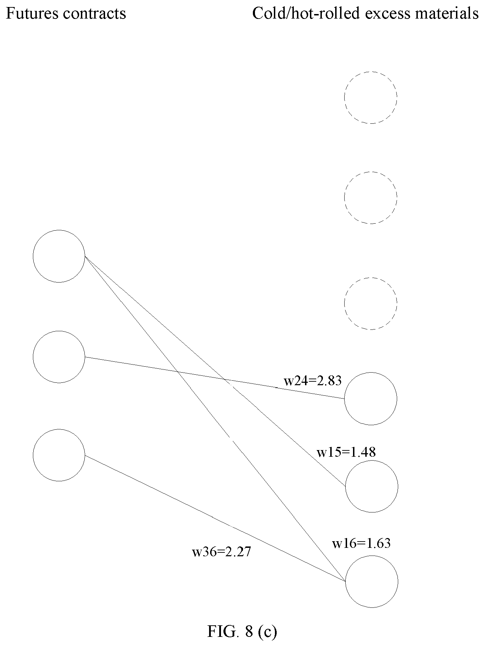

(3) The remaining materials 4, 5, 6 and contracts 1, 2, 3 are used to reconstruct matching relationship graph. As shown in FIG. 8(c), excess materials 1, 2, 3 are represented as virtual nodes, indicating that these material nodes have been removed, and related connection lines are also deleted. Due to a change in the contract efficiency weights, a weight inspection needs to be performed again. The contract 1 can also be used as an example. First, checking the excess material 5. The process corresponding to the excess material 5 is 10-annealing, with a weight of 9.88 tons. In contract 1, the process deficiency weight of the same process is 30 tons. The condition that weight of an excess material does not exceed the deficiency weight of process which is the same as the process corresponding to the excess material is met, because 9.88<30. In addition, based on the feed rate of each process in contract 1, for weight of excess material 5 being 9.88, the weight of excess material 5 corresponding to the steelmaking process may be calculated. The calculation process can be called weight converting process. Therefore, the weight of the excess material 5 converted to the steelmaking process can be represented as: 9.88*1.013*1.023*1.036*1.015, which equals 10.77. 10.77 is lower than 11.78. Therefore, the weights of the contract 1 and the excess material 5 are qualified. The connection relationship is reserved, and the matching weight remains unchanged. Similarly, weight inspection may be performed on remaining contracts and remaining excess materials. In this example, the weight inspection of all contracts and remaining excess materials is all qualified. The matching relationship graph can be constructed as shown in FIG. 8(c).

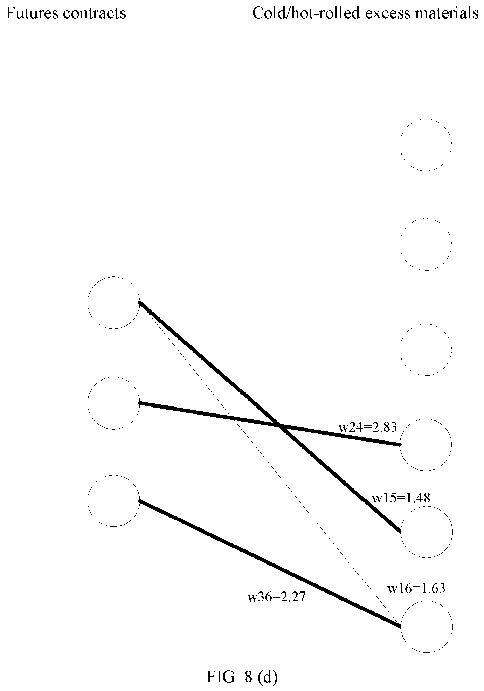

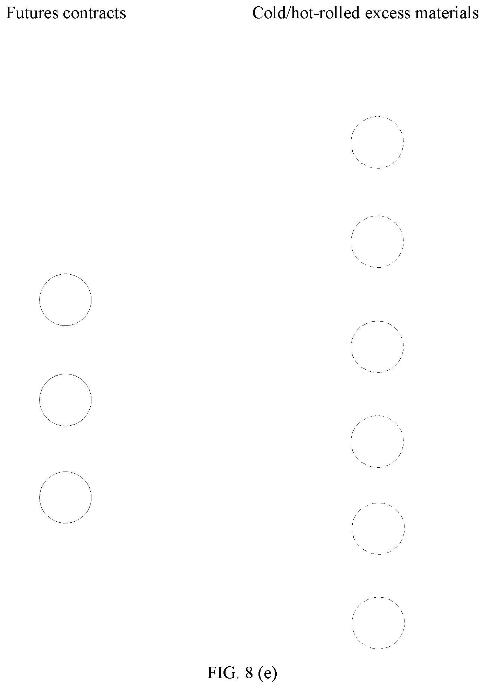

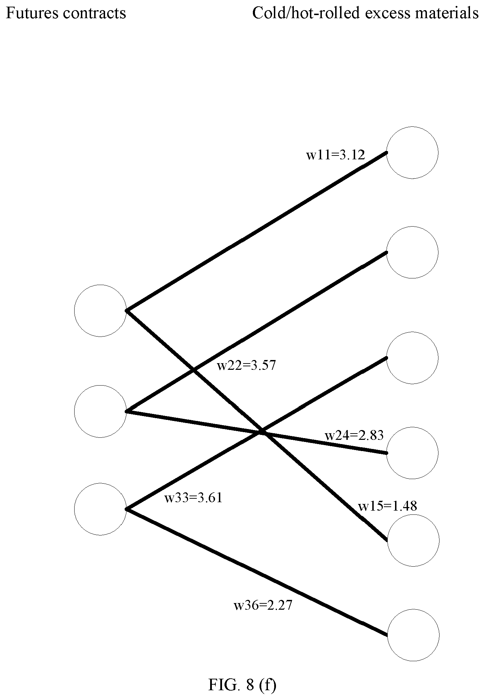

(4) Because there is still connection relationship between the remaining excess materials and the remaining contracts, the maximum weight matching algorithm can be used to compute the current matching relationship graph, to obtain the matching results shown in the thick solid lines in FIG. 8(d). The matching results include contract 1-excess material 5, contract 2-excess material 4, and contract 3-excess material 6. After the matched excess materials 4, 5, and 6 are removed, all the excess materials are removed, and there is no connection relationship between contracts and excess materials (as shown in FIG. 8(e)). Therefore, the matching calculation process ends. A final use solution is shown in FIG. 8(f). Excess materials 1 and 5 are matched to the contract 1; excess materials 2 and 4 are matched to the contract 2, and excess materials 3 and 6 are matched to the contract 3.

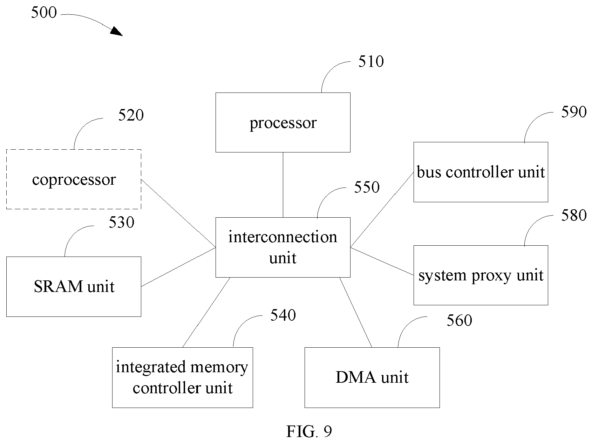

Referring to FIG. 9, FIG. 9 is a schematic block diagram of a System on Chip (SoC) 500 according to an embodiment of this disclosure. The SoC 500 may be disposed on an intelligent production line, and is configured to establish a method for cross-process use of cold/hot-rolled excess materials between upstream and downstream groups of a production line and implement control.

In FIG. 9, similar components have the same reference numerals. In addition, components in dotted line frames are optional features of a more advanced SoC. In FIG. 9, the SoC 500 includes an interconnection unit 550 coupled to the processor 510, a system proxy unit 580, a bus controller unit 590, an integrated memory controller unit 540, a group of or one or more coprocessors 520 which may include an integrated graphics logic, an image processor, an audio processor, and a video processor, a static random-access memory (SRAM) unit 530, a direct memory access (DMA) unit 560. In an embodiment, the coprocessor 520 includes a dedicated processor such as a network or a communication processor, a compression engine, general-purpose computing on graphics processing units (GPGPU), a high throughput MIC processor, or an embedded processor.

The SRAM unit 530 may include one or more tangible, non-temporary, computer readable media for storing data and/or instructions. The computer readable storage medium stores an instruction. Specifically, a temporary and permanent copy of the instruction is stored. The instruction may include an instruction that is executed by at least one of the processors to cause the SoC to implement the method shown in FIG. 3, FIG. 5, FIG. 6, and FIG. 7. When the instruction runs on a computer, the computer performs the method disclosed in embodiment 1 and/or embodiment 2 above.

In this disclosure, the term "and/or" is merely an association relationship that describes associated objects, and indicates that three relationships may exist. For example, A and/or B may indicate: A exists separately, A and B exist simultaneously, and B exists separately.

All method embodiments of this disclosure may be implemented in a manner of software, a magnetic component, firmware and so on. Program code may be applied to input instructions to perform the functions described herein and generate output information. The output information may be applied to one or more output devices in a known manner. For the purposes of this disclosure, a processing system includes any system with a processor such as a digital signal processor (DSP), a microcontroller, an application specific integrated circuit (ASIC), or a microprocessor.

Program code may be implemented in an advanced programming language or an object-oriented programming language, to communicate with a processing system. Program code may also be implemented in assembly language or machine language when required. In fact, the mechanisms described herein are not limited to the scope of any particular programming language. In either case, the language may be a compilation language or an interpretation language.

One or more aspects of the at least one embodiment may be implemented by an representational instruction stored in a computer readable storage medium, where the instruction represents various logic in the processor, and the instruction causes, when read by a machine, the machine to make logic which is used to execute the method or technology described in this disclosure. Representations referred to as "Intellectual Property (IP) cores" may be stored on a tangible computer readable storage medium and provided to multiple customers or production facilities to load into a manufacturing machine that actually manufactures the logic or processor.

In some cases, the instruction converter may be configured to convert instructions from a source instruction set to a target instruction set. For example, the instruction converter may convert instructions into one or more other instructions to be processed by the core by the way of converting (e.g., using static binary transforms, including dynamic binary transforms of dynamic compiling), transforming, emulating, or other ways. The instruction converter may be implemented by software, hardware, firmware, or a combination thereof. The instruction converter may be on a processor, outside a processor, or partly on a processor, and partly outside a processor.

**Claims**

1. A method for cross-process use of cold/hot-rolled excess materials, applied in an electronic device, comprising:

   obtaining multiple futures contracts and multiple cold/hot-rolled excess materials with same steel grade, wherein the multiple cold/hot-rolled excess materials are used as deficient materials of corresponding processes in the multiple futures contracts;

   forming at least one matching pair consisting of a futures contract and a cold/hot-rolled excess material by taking the multiple futures contracts and the multiple cold/hot-rolled excess materials as nodes in a weighted binary graph, to construct a matching relationship graph between the multiple futures contracts and the multiple cold/hot-rolled excess materials, and determining a matching weight of each matching pair in the at least one matching pair;

   computing the matching relationship graph based on a binary graph maximum weight matching algorithm, to obtain a use solution between the multiple futures contract and the multiple cold/hot-rolled excess materials, wherein in the use solution, a matched cold/hot-rolled excess material is associated with a futures contract, and a maximum sum of matching weights of the at least one matching pair is obtained;

   wherein computing the matching relationship graph based on a binary graph maximum weight matching algorithm, to obtain a use solution between the multiple futures contract and the multiple cold/hot-rolled excess materials, comprises:

   determining at least one matching group in the at least one matching pair consisting of a futures contract and a cold/hot-rolled excess material in the matching relationship graph based on the binary graph maximum weight matching algorithm, according to preset constraint conditions;

   updating a material deficiency weight in a corresponding futures contract based on a cold/hot-rolled excess material of each matching group in the at least one matching group;

   removing the at least one matching group and each cold/hot-rolled excess material in the at least one matching group from the matching relationship graph, and using changed matching relationship graph as a new matching relationship graph;

   repeating process of computing the matching relationship graph until no matching pair consisting of a futures contract and a cold/hot-rolled excess material exist in the matching relationship graph, to obtain a use solution between the multiple futures contract and the multiple cold/hot-rolled excess materials.

2. The method of claim 1, wherein forming at least one matching pair consisting of a futures contract and a cold/hot-rolled excess material by taking the multiple futures contracts and the multiple cold/hot-rolled excess materials as nodes in a weighted binary graph, comprises:

   determining a rule of use, wherein the rule of use is used to check whether the multiple futures contracts match the multiple cold/hot-rolled excess materials;

   forming at least one matching pair consisting of a futures contract and a cold/hot-rolled excess material which meet the rule of use preset, by taking the multiple futures contracts and the multiple cold/hot-rolled excess materials as nodes in a weighted binary graph.

3. The method of claim 1, wherein determining a matching weight of each matching pair in the at least one matching pair, comprises:
   determining a matching weight for each matching pair in the at least one matching pair according to preset matching priority information, wherein the matching priority information is used to describe a matching quality between the multiple futures contracts and the multiple cold/hot-rolled excess materials.

4. The method of claim 3, wherein determining a matching weight for each matching pair in the at least one matching pair according to preset matching priority information, comprises:

   determining, a priority level of a futures contract in each matching pair of the at least one matching pair, according to preset matching priority information;

   determining a matching weight of each matching pair in the at least one matching pair, according to the priority level and weight of a cold/hot-rolled excess material in each matching pair.

5. The method of any one of claims 2 to 4, wherein the rule of use includes at least one of the following: rule of a specification type, rule of a surface type, rule of a performance and process type, rule of a management type, and rule

EP 4 438 195 B1

of a component type.

6. The method of any one of claims 3 to 4, wherein the matching priority information includes priority content and priority level, and includes at least one of the following: contract priority information, material priority information, and adaptation priority information.

7. The method of claim 1, wherein after removing the at least one matching group and each cold/hot-rolled excess material in the at least one matching group from the matching relationship graph, the method further comprises: performing weight inspection on each remaining matching pair in the matching relationship graph, retaining matching pairs that meet a weight inspection rule, and removing matching pair that don't meet the weight inspection rule.

8. The method of any one of claims 1 to 7, wherein the constraint conditions include at least one of the following: a matching quantity constraint, a contract process deficiency weight constraint, a use rule constraint, and a decision variable value constraint.

9. An apparatus for cross-process use of cold/hot-rolled excess materials, comprising:

an obtaining unit, configured to obtain multiple futures contracts and multiple cold/hot-rolled excess materials with same steel grade, wherein the multiple cold/hot-rolled excess materials are used as deficient materials of corresponding processes in the multiple futures contracts;
a matching relationship graph determining unit, configured to form at least one matching pair consisting of a futures contract and a cold/hot-rolled excess material by taking the multiple futures contracts and the multiple cold/hot-rolled excess materials as nodes in a weighted binary graph, to construct a matching relationship graph between the multiple futures contracts and the multiple cold/hot-rolled excess materials, and determining a matching weight of each matching pair in the at least one matching pair;
a use solution generating unit, configured to compute the matching relationship graph based on a binary graph maximum weight matching algorithm, to obtain a use solution between the multiple futures contract and the multiple cold/hot-rolled excess materials, wherein in the use solution, a matched cold/hot-rolled excess material is associated with a futures contract, and a maximum sum of matching weights of the at least one matching pair is obtained;
wherein in the use solution generating unit, computing the matching relationship graph based on a binary graph maximum weight matching algorithm, to obtain a use solution between the multiple futures contract and the multiple cold/hot-rolled excess materials, comprises:

determining at least one matching group in the at least one matching pair consisting of a futures contract and a cold/hot-rolled excess material in the matching relationship graph based on the binary graph maximum weight matching algorithm, according to preset constraint conditions;
updating a material deficiency weight in a corresponding futures contract based on a cold/hot-rolled excess material of each matching group in the at least one matching group;
removing the at least one matching group and each cold/hot-rolled excess material in the at least one matching group from the matching relationship graph, and using changed matching relationship graph as a new matching relationship graph;
repeating process of computing the matching relationship graph until no matching pair consisting of a futures contract and a cold/hot-rolled excess material exist in the matching relationship graph, to obtain a use solution between the multiple futures contract and the multiple cold/hot-rolled excess materials.

10. The apparatus of claim 9, wherein the matching relationship graph determining unit comprises:

a rule of use determining sub-unit, configured to determine a rule of use, wherein the rule of use is used to check whether the multiple futures contracts match the multiple cold/hot-rolled excess materials;
a matching pair generating sub-unit, configured to form at least one matching pair consisting of a futures contract and a cold/hot-rolled excess material which meet the rule of use preset, by taking the multiple futures contracts and the multiple cold/hot-rolled excess materials as nodes in a weighted binary graph.

11. The apparatus of claim 9, wherein in the matching relationship graph determining unit, determining a matching weight of each matching pair in the at least one matching pair, comprises:
determining a matching weight for each matching pair in the at least one matching pair according to preset matching priority information, wherein the matching priority information is used to describe a matching quality between the multiple futures contracts and the multiple cold/hot-rolled excess materials.

12. The apparatus according to claim 11, wherein in the matching relationship graph determining unit, determining a matching weight for each matching pair in the at least one matching pair according to preset matching priority information, comprises:

   determining, a priority level of a futures contract in each matching pair of the at least one matching pair, according to preset matching priority information;
   determining a matching weight of each matching pair in the at least one matching pair, according to the priority level and weight of a cold/hot-rolled excess material in each matching pair.

13. The apparatus of any one of claims 10 to 12, wherein in the matching relationship graph determining unit, the rule of use includes at least one of the following: rule of a specification type, rule of a surface type, rule of a performance and process type, rule of a management type, and rule of a component type.

14. The apparatus of any one of claims 11 to 12, wherein in the matching relationship graph determining unit, the matching priority information includes priority content and priority level, and includes at least one of the following: contract priority information, material priority information, and adaptation priority information.

15. The apparatus of claim 9, wherein the apparatus further comprises:
   a weight inspection unit, configured to perform weight inspection on each remaining matching pair in the matching relationship graph, retaining matching pairs that meet a weight inspection rule, and removing matching pair that don't meet the weight inspection rule.

16. The apparatus of any one of claims 9 to 15, wherein in the use solution generating unit, the constraint conditions include at least one of the following: a matching quantity constraint, a contract process deficiency weight constraint, a use rule constraint, and a decision variable value constraint.

17. A non-transitory computer-readable storage medium storing instructions, wherein when the instructions are executed on a computer, the instructions cause the computer to execute the method of any one of claims 1 to 8.

18. An electronic device, comprising:

   a memory, configured to store instructions executed by one or more processors of the electronic device; and
   a processor, which is one of processors of the electronic device, configured to execute the method of any one of claims 1 to 8.

19. A computer program product comprising computer programs/instructions, wherein the computer programs/instructions are executed by a processor to implement the method of any one of claims 1 to 8.

**Patentansprüche**

1. Verfahren zur prozessübergreifenden Verwendung von kalt-/warmgewalzten Überschussmaterialien, die in einer elektronischen Vorrichtung angewandt werden, das Folgendes umfasst:

   Erhalten mehrerer Terminkontrakte und mehrerer kalt-/warmgewalzter Überschussmaterialien derselben Stahlsorte, wobei die mehreren kalt-/warmgewalzten Überschussmaterialien als mangelhafte Materialien entsprechender Verfahren in den mehreren Terminkontrakten verwendet werden;
   Bilden mindestens eines übereinstimmenden Paares, das aus einem Terminkontrakt und einem kalt-/warmgewalzten Überschussmaterial besteht, durch Betrachten der mehreren Terminkontrakte und der mehreren kalt-/warmgewalzten Überschussmaterialien als Knoten in einem gewichteten binären Graphen, um einen übereinstimmenden Beziehungsgraphen zwischen den mehreren Terminkontrakten und den mehreren kalt-/warmgewalzten Überschussmaterialien zu konstruieren, und Bestimmen eines übereinstimmenden Gewichts jedes übereinstimmenden Paares in dem mindestens einen übereinstimmenden Paar;
   Berechnen des übereinstimmenden Beziehungsgraphen basierend auf einem Algorithmus zur Anpassung des maximalen Gewichts binärer Graphen, um eine Nutzungslösung zwischen den mehreren Terminkontrakten und den mehreren kalt-/warmgewalzten Überschussmaterialien zu erhalten, wobei in der Nutzungslösung ein übereinstimmendes kalt-/warmgewalztes Überschussmaterial mit einem Terminkontrakt assoziiert ist und eine maximale Summe von übereinstimmenden Gewichten des mindestens einen übereinstimmenden Paares erhalten wird;

wobei das Berechnen des übereinstimmenden Beziehungsgraphen basierend auf einem Algorithmus zur Anpassung des maximalen Gewichts binärer Graphen zum Erhalten einer Nutzungslösung zwischen den mehreren Terminkontrakten und den mehreren kalt-/warmgewalzten Überschussmaterialien Folgendes umfasst:

Bestimmen mindestens einer übereinstimmenden Gruppe in dem mindestens einen aus einem Terminkontrakt und einem kalt-/warmgewalzten Überschussmaterial bestehenden übereinstimmenden Paar in dem übereinstimmenden Beziehungsgraphen basierend auf dem Algorithmus zur Anpassung des maximalen Gewichts binärer Graphen gemäß voreingestellten Beschränkungsbedingungen;

Aktualisieren eines Materialmangelgewichts in einem entsprechenden Terminkontrakt basierend auf einem kalt-/warmgewalzten Überschussmaterial jeder übereinstimmenden Gruppe in der mindestens einen übereinstimmenden Gruppe;

Entfernen der mindestens einen übereinstimmenden Gruppe und jedes kalt-/warmgewalzten Überschussmaterials in der mindestens einen übereinstimmenden Gruppe aus dem übereinstimmenden Beziehungsgraphen und Verwenden des geänderten übereinstimmenden Beziehungsgraphen als einen neuen übereinstimmenden Beziehungsgraphen;

Wiederholen des Verfahrens zum Berechnen des übereinstimmenden Beziehungsgraphen, bis kein aus einem Terminkontrakt und einem kalt-/warmgewalzten Überschussmaterial bestehendes übereinstimmendes Paar mehr in dem übereinstimmenden Beziehungsgraphen existiert, um eine Nutzungslösung zwischen den mehreren Terminkontrakten und den mehreren kalt-/warmgewalzten Überschussmaterialien zu erhalten.

2. Verfahren nach Anspruch 1, wobei das Bilden mindestens eines aus einem Terminkontrakt und einem kalt-/warmgewalzten Überschussmaterial bestehenden übereinstimmenden Paares durch Betrachten der mehreren Terminkontrakte und der mehreren kalt-/warmgewalzten Überschussmaterialien als Knoten in einem gewichteten binären Graphen Folgendes umfasst:

Bestimmen einer Nutzungsregel, wobei die Nutzungsregel verwendet wird, um zu prüfen, ob die mehreren Terminkontrakte mit den mehreren kalt-/warmgewalzten Überschussmaterialien übereinstimmen;

Bilden mindestens eines übereinstimmenden Paares, das aus einem Terminkontrakt und einem kalt-/warmgewalzten Überschussmaterial besteht, die die voreingestellte Nutzungsregel erfüllen, durch Betrachten der mehreren Terminkontrakte und der mehreren kalt-/warmgewalzten Überschussmaterialien als Knoten in einem gewichteten binären Graphen.

3. Verfahren nach Anspruch 1, wobei das Bestimmen eines übereinstimmenden Gewichts jedes übereinstimmenden Paares in dem mindestens einen übereinstimmenden Paar Folgendes umfasst:
Bestimmen eines übereinstimmenden Gewichts für jedes übereinstimmende Paar in dem mindestens einen übereinstimmenden Paar gemäß voreingestellten übereinstimmenden Prioritätsinformationen, wobei die übereinstimmenden Prioritätsinformationen verwendet werden, um eine übereinstimmende Qualität zwischen den mehreren Terminkontrakten und den mehreren kalt-/warmgewalzten Überschussmaterialien zu beschreiben.

4. Verfahren nach Anspruch 3, wobei das Bestimmen eines übereinstimmenden Gewichts für jedes übereinstimmende Paar in dem mindestens einen übereinstimmenden Paar gemäß voreingestellten Prioritätsinformationen Folgendes umfasst:

Bestimmen einer Prioritätsstufe eines Terminkontrakts in jedem übereinstimmenden Paar des mindestens einen übereinstimmenden Paares gemäß voreingestellten übereinstimmenden Prioritätsinformationen;

Bestimmen eines übereinstimmenden Gewichts jedes übereinstimmenden Paares in dem mindestens einen übereinstimmenden Paar gemäß der Prioritätsstufe und dem Gewicht eines kalt-/warmgewalzten Überschussmaterials in jedem übereinstimmenden Paar.

5. Verfahren nach einem der Ansprüche 2 bis 4, wobei die Nutzungsregel mindestens eine der folgenden Regeln enthält: Regel eines Spezifikationstyps, Regel eines Oberflächentyps, Regel eines Leistungs- und Prozesstyps, Regel eines Managementtyps und/oder Regel eines Komponententyps.

**6.** Verfahren nach einem der Ansprüche 3 bis 4, wobei die übereinstimmenden Prioritätsinformationen einen Prioritätsinhalt und eine Prioritätsstufe enthalten und mindestens eine der folgenden Informationen enthalten: Vertragsprioritätsinformationen, Materialprioritätsinformationen und/oder Anpassungsprioritätsinformationen.

**7.** Verfahren nach Anspruch 1, wobei das Verfahren nach dem Entfernen der mindestens einen übereinstimmenden Gruppe und jedes kalt-/warmgewalzten Überschussmaterials in der mindestens einen übereinstimmenden Gruppe aus dem übereinstimmenden Beziehungsgraphen ferner Folgendes umfasst:
Ausführen einer Gewichtsinspektion an jedem verbleibenden übereinstimmenden Paar in dem übereinstimmenden Beziehungsgraphen, Beibehalten übereinstimmender Paare, die eine Gewichtsinspektionsregel erfüllen, und Entfernen übereinstimmender Paare, die die Gewichtsinspektionsregel nicht erfüllen.

**8.** Verfahren nach einem der Ansprüche 1 bis 7, wobei die Beschränkungsbedingungen mindestens eine der folgenden Beschränkungen enthalten: eine übereinstimmende Mengenbeschränkung, eine Gewichtsbeschränkung für Vertragsprozessmängel, eine Nutzungsregelbeschränkung und/oder eine Entscheidungsvariablenwertbeschränkung.

**9.** Vorrichtung zur prozessübergreifenden Verwendung von kalt-/warmgewalzten Überschussmaterialien, die Folgendes umfasst:

eine Beschaffungseinheit, die so konfiguriert ist, dass sie mehrere Terminkontrakte und mehrere kalt-/warmgewalzte Überschussmaterialien derselben Stahlsorte beschafft, wobei die mehreren kalt-warmgewalzten Überschussmaterialien als mangelhafte Materialien entsprechender Verfahren in den mehreren Terminkontrakten verwendet werden;
eine Einheit zur Bestimmung eines übereinstimmenden Beziehungsgraphen, die so konfiguriert ist, dass sie mindestens ein aus einem Terminkontrakt und einem kalt-/warmgewalzten Überschussmaterial bestehendes übereinstimmendes Paar durch Betrachten der mehreren Terminkontrakte und der mehreren kalt-/warmgewalzten Überschussmaterialien als Knoten in einem gewichteten binären Graphen bildet, um einen übereinstimmenden Beziehungsgraphen zwischen den mehreren Terminkontrakten und den mehreren kalt-/warmgewalzten Überschussmaterialien zu konstruieren, und Bestimmen eines übereinstimmenden Gewichts jedes übereinstimmenden Paares in dem mindestens einen übereinstimmenden Paar;
eine Einheit zur Erzeugung einer Nutzungslösung, die so konfiguriert ist, dass sie den übereinstimmenden Beziehungsgraphen basierend auf einem Algorithmus zur Anpassung des maximalen Gewichts binärer Graphen berechnet, um eine Nutzungslösung zwischen den mehreren Terminkontrakten und den mehreren kalt-/warmgewalzten Überschussmaterialien zu erhalten, wobei in der Nutzungslösung ein übereinstimmendes kalt-/warmgewalztes Überschussmaterial mit einem Terminkontrakt assoziiert ist und eine maximale Summe von übereinstimmenden Gewichten des mindestens einen übereinstimmenden Paares erhalten wird;
wobei in der Einheit zur Erzeugung einer Nutzungslösung das Berechnen des übereinstimmenden Beziehungsgraphen basierend auf einem Algorithmus zur Anpassung des maximalen Gewichts binärer Graphen zum Erhalten einer Nutzungslösung zwischen den mehreren Terminkontrakten und den mehreren kalt-/warmgewalzten Überschussmaterialien Folgendes umfasst:

Bestimmen mindestens einer übereinstimmenden Gruppe in dem mindestens einen aus einem Terminkontrakt und einem kalt-/warmgewalzten Überschussmaterial bestehenden übereinstimmenden Paar in dem übereinstimmenden Beziehungsgraphen basierend auf dem Algorithmus zur Anpassung des maximalen Gewichts binärer Graphen gemäß voreingestellten Beschränkungsbedingungen;
Aktualisieren eines Materialmangelgewichts in einem entsprechenden Terminkontrakt basierend auf einem kalt-/warmgewalzten Überschussmaterial jeder übereinstimmenden Gruppe in der mindestens einen übereinstimmenden Gruppe;
Entfernen der mindestens einen übereinstimmenden Gruppe und jedes kalt-/warmgewalzten Überschussmaterials in der mindestens einen übereinstimmenden Gruppe aus dem übereinstimmenden Beziehungsgraphen und Verwenden des geänderten übereinstimmenden Beziehungsgraphen als einen neuen übereinstimmenden Beziehungsgraphen;
Wiederholen des Verfahrens zum Berechnen des übereinstimmenden Beziehungsgraphen, bis kein aus einem Terminkontrakt und einem kalt-/warmgewalzten Überschussmaterial bestehendes übereinstimmendes Paar mehr existiert, um eine Nutzungslösung zwischen den mehreren Terminkontrakten und den mehreren kalt-/warmgewalzten Überschussmaterialien zu erhalten.

**10.** Vorrichtung nach Anspruch 9, wobei die Einheit zur Bestimmung des übereinstimmenden Beziehungsgraphen Folgendes umfasst:

eine Untereinheit zur Bestimmung der Nutzungsregel, die zum Bestimmen einer Nutzungsregel konfiguriert ist, wobei die Nutzungsregel verwendet wird, um zu prüfen, ob die mehreren Terminkontrakte mit den mehreren kalt-/warmgewalzten Überschussmaterialien übereinstimmen;

eine Untereinheit zur Erzeugung eines übereinstimmenden Paares, die so konfiguriert ist, dass sie mindestens ein übereinstimmendes Paar, das aus einem Terminkontrakt und einem kalt-/warmgewalzten Überschussmaterial besteht, die die voreingestellte Nutzungsregel erfüllen, durch Betrachten der mehreren Terminkontrakte und der mehreren kalt-/warmgewalzten Überschussmaterialien als Knoten in einem gewichteten binären Graphen bildet.

11. Vorrichtung nach Anspruch 9, wobei in der Einheit zur Bestimmung des übereinstimmenden Beziehungsgraphen das Bestimmen eines übereinstimmenden Gewichts jedes übereinstimmenden Paares in dem mindestens einen übereinstimmenden Paar Folgendes umfasst:

Bestimmen eines übereinstimmenden Gewichts für jedes übereinstimmende Paar in dem mindestens einen übereinstimmenden Paar gemäß voreingestellten Prioritätsinformationen, wobei die übereinstimmenden Prioritätsinformationen verwendet werden, um eine übereinstimmende Qualität zwischen den mehreren Terminkontrakten und den mehreren kalt-/warmgewalzten Überschussmaterialien zu beschreiben.

12. Vorrichtung nach Anspruch 11, wobei in der Einheit zur Bestimmung des übereinstimmenden Beziehungsgraphen das Bestimmen eines übereinstimmenden Gewichts für jedes übereinstimmende Paar in dem mindestens einen übereinstimmenden Paar gemäß voreingestellten übereinstimmenden Prioritätsinformationen Folgendes umfasst:

Bestimmen einer Prioritätsstufe eines Terminkontrakts in jedem übereinstimmenden Paar des mindestens einen übereinstimmenden Paares gemäß voreingestellten übereinstimmenden Prioritätsinformationen;
Bestimmen eines übereinstimmenden Gewichts jedes übereinstimmenden Paares in dem mindestens einen übereinstimmenden Paar gemäß der Prioritätsstufe und dem Gewicht eines kalt-/warmgewalzten Überschussmaterials in jedem übereinstimmenden Paar.

13. Vorrichtung nach einem der Ansprüche 10 bis 12, wobei in der Einheit zur Bestimmung des übereinstimmenden Beziehungsgraphen die Nutzungsregel mindestens eine der folgenden Regeln enthält: Regel eines Spezifikationstyps, Regel eines Oberflächentyps, Regel eines Leistungs- und Prozesstyps, Regel eines Managementtyps und/oder Regel eines Komponententyps.

14. Vorrichtung nach einem der Ansprüche 11 bis 12, wobei in der Einheit zur Bestimmung des übereinstimmenden Beziehungsgraphen die übereinstimmenden Prioritätsinformationen einen Prioritätsinhalt und eine Prioritätsstufe enthalten und mindestens eine der folgenden Informationen enthalten: Vertragsprioritätsinformationen, Materialprioritätsinformationen und/oder Anpassungsprioritätsinformationen.

15. Vorrichtung nach Anspruch 9, wobei die Vorrichtung ferner Folgendes umfasst:
eine Gewichtsinspektionseinheit, die so konfiguriert ist, dass sie eine Gewichtsinspektion an jedem verbleibenden übereinstimmenden Paar in dem übereinstimmenden Beziehungsgraphen ausführt, wobei übereinstimmende Paare, die eine Gewichtsinspektionsregel erfüllen, beibehalten werden und übereinstimmende Paare, die die Gewichtsinspektionsregel nicht erfüllen, entfernt werden.

16. Vorrichtung nach einem der Ansprüche 9 bis 15, wobei in der Einheit zur Erzeugung der Nutzungslösung die Beschränkungsbedingungen mindestens eine der folgenden Beschränkungen enthalten: eine übereinstimmende Mengenbeschränkung, eine Gewichtsbeschränkung für Vertragsprozessmängel, eine Nutzungsregelbeschränkung und/oder eine Entscheidungsvariablenwertbeschränkung.

17. Nichtflüchtiges computerlesbares Speichermedium, das Anweisungen speichert, wobei, wenn die Anweisungen auf einem Computer ausgeführt werden, die Anweisungen den Computer veranlassen, das Verfahren nach einem der Ansprüche 1 bis 8 auszuführen.

18. Elektronische Vorrichtung, die Folgendes umfasst:

einen Speicher, der zum Speichern von Anweisungen konfiguriert ist, die von einem oder mehreren Prozessoren der elektronischen Vorrichtung ausgeführt werden; und
einen Prozessor, der einer der Prozessoren der elektronischen Vorrichtung ist, der zum Ausführen des Verfahrens nach einem der Ansprüche 1 bis 8 konfiguriert ist.

**19.** Computerprogrammprodukt, das Computerprogramme/-anweisungen umfasst, wobei die Computerprogramme/-anweisungen von einem Prozessor ausgeführt werden, um das Verfahren nach einem der Ansprüche 1 bis 8 zu implementieren.

**Revendications**

**1.** Méthode pour l'utilisation de traitement croisé de matériaux excédentaires laminés à froid/à chaud, appliquée dans un dispositif électronique, comprenant :

obtenir de multiples contrats à terme et de multiples matériaux excédentaires laminés à froid/à chaud avec la même nuance d'acier, où les multiples matériaux excédentaires laminés à froid/à chaud sont utilisés comme matériaux déficients de procédés correspondants dans les multiples contrats à terme ;

former au moins une paire de correspondance constituée d'un contrat à terme et d'un matériau excédentaire laminé à froid/à chaud en prenant les multiples contrats à terme et les multiples matériaux excédentaires laminés à froid/à chaud comme nœuds dans un graphe binaire pondéré, afin de construire un graphe de relation de correspondance entre les multiples contrats à terme et les multiples matériaux excédentaires laminés à froid/à chaud, et déterminer un poids de correspondance de chaque paire de correspondance dans l'au moins une paire de correspondance ;

calculer le graphe de relation de correspondance sur la base d'un algorithme de correspondance de poids maximum de graphe binaire, afin d'obtenir une solution d'utilisation entre le multiple contrat à terme et les multiples matériaux excédentaires laminés à froid/à chaud, où, dans la solution d'utilisation, un matériau excédentaire laminé à froid/à chaud apparié est associé à un contrat à terme, et une somme maximale de poids de correspondances de l'au moins une paire de correspondance est obtenue ;

où calculer le graphe de relation de correspondance sur la base d'un algorithme de correspondance de poids maximum de graphe binaire, afin d'obtenir une solution d'utilisation entre le multiple contrat à terme et les multiples matériaux excédentaires laminés à froid/à chaud comprend :

déterminer au moins un groupe de correspondance dans l'au moins une paire de correspondance constituée d'un contrat à terme et d'un matériau excédentaire laminé à froid/à chaud dans le graphe de relation de correspondance sur la base de l'algorithme de correspondance de poids maximum de graphe binaire, selon des conditions de contrainte prédéfinies ;

mettre à jour un poids de déficience de matériau dans un contrat à terme correspondant sur la base d'un matériau excédentaire laminé à froid/à chaud de chaque groupe de correspondance dans l'au moins un groupe de correspondance ;

supprimer l'au moins un groupe de correspondance et chaque matériau excédentaire laminé à froid/à chaud dans l'au moins un groupe de correspondance du graphe de relation de correspondance, et utiliser un graphe de relation de correspondance modifié comme un nouveau graphe de relation de correspondance ;

répéter le procédé de calcul du graphe de relation de correspondance jusqu'à ce qu'il n'existe plus de paire de correspondance constituée d'un contrat à terme et d'un matériau excédentaire laminé à froid/à chaud dans le graphe de relation de correspondance, afin d'obtenir une solution d'utilisation entre les multiples contrats à terme et les multiples matériaux excédentaires laminés à froid/à chaud.

**2.** Méthode selon la revendication 1, où la formation d'au moins une paire de correspondance constituée d'un contrat à terme et d'un matériau excédentaire laminé à froid/à chaud en prenant les multiples contrats à terme et les multiples matériaux excédentaires laminés à froid/à chaud comme nœuds dans un graphe binaire pondéré, comprend :

déterminer une règle d'utilisation, où la règle d'utilisation est utilisée pour vérifier si les multiples contrats à terme correspondent aux multiples matériaux excédentaires laminés à froid/à chaud ;

former au moins une paire de correspondance constituée d'un contrat à terme et d'un matériau excédentaire laminé à froid/à chaud qui satisfait à la règle d'utilisation prédéfinie, en prenant les multiples contrats à terme et les multiples matériaux excédentaires laminés à froid/à chaud comme nœuds dans un graphe binaire pondéré.

**3.** Méthode selon la revendication 1, où la détermination d'un poids de correspondance de chaque paire de correspondance dans l'au moins une paire de correspondance comprend :
déterminer un poids de correspondance pour chaque paire de correspondance dans l'au moins une paire de correspondance selon des informations de priorité de correspondance prédéfinies, où les informations de priorité de correspondance sont utilisées pour décrire une qualité de correspondance entre les multiples contrats à terme et les multiples matériaux excédentaires laminés à froid/à chaud.

4. Méthode selon la revendication 3, où la détermination d'un poids de correspondance pour chaque paire de correspondance dans l'au moins une paire de correspondance selon des informations de priorité de correspondance prédéfinies comprend :

   déterminer un niveau de priorité d'un contrat à terme dans chaque paire de correspondance de l'au moins une paire de correspondance, selon des informations de priorité de correspondance prédéfinies ;
   déterminer un poids de correspondance de chaque paire de correspondance dans l'au moins une paire de correspondance, selon le niveau de priorité et le poids d'un matériau excédentaire laminé à froid/à chaud dans chaque paire de correspondance.

5. Méthode selon l'une quelconque des revendications 2 à 4, où la règle d'utilisation inclut au moins l'une parmi les suivantes : une règle d'un type de spécification, une règle d'un type de surface, une règle d'un type de performance et de procédé, une règle d'un type de gestion, et une règle d'un type de composant.

6. Méthode selon l'une quelconque des revendications 3 à 4, où les informations de priorité de correspondance incluent un contenu de priorité et un niveau de priorité, et incluent au moins l'une parmi les suivantes : des informations de priorité de contrat, des informations de priorité de matériau, et des informations de priorité d'adaptation.

7. Méthode selon la revendication 1, où, après avoir supprimé l'au moins un groupe de correspondance et chaque matériau excédentaire laminé à froid/à chaud dans l'au moins un groupe de correspondance du graphe de relation de correspondance, la méthode comprend en outre :
   réaliser une inspection de poids sur chaque paire de correspondance restante dans le graphe de relation de correspondance, conserver les paires de correspondance qui satisfont à une règle d'inspection de poids et supprimer les paires de correspondance qui ne satisfont pas à la règle d'inspection de poids.

8. Méthode selon l'une quelconque des revendications 1 à 7, où les conditions de contrainte incluent au moins l'une parmi les suivantes : une contrainte de quantité de correspondance, une contrainte de poids de déficience de procédé de contrat, une contrainte de règle d'utilisation et une contrainte de valeur de variable de décision.

9. Appareil pour l'utilisation de traitement croisé de matériaux excédentaires laminés à froid/à chaud, comprenant :

   une unité d'obtention, configurée pour obtenir de multiples contrats à terme et de multiples matériaux excédentaires laminés à froid/à chaud avec la même nuance d'acier, où les multiples matériaux excédentaires laminés à froid/à chaud sont utilisés comme matériaux déficients de procédé correspondants dans les multiples contrats à terme ;
   une unité de détermination de graphe de relation de correspondance, configurée pour former au moins une paire de correspondance constituée d'un contrat à terme et d'un matériau excédentaire laminé à froid/à chaud en prenant les multiples contrats à terme et les multiples matériaux excédentaires laminés à froid/à chaud comme nœuds dans un graphe binaire pondéré, pour construire un graphe de relation de correspondance entre les multiples contrats à terme et les multiples matériaux excédentaires laminés à froid/à chaud, et déterminer un poids de correspondance de chaque paire de correspondance dans l'au moins une paire de correspondance ;
   une unité de génération de solution d'utilisation, configurée pour calculer le graphe de relation de correspondance sur la base d'un algorithme de correspondance de poids maximum de graphe binaire, afin d'obtenir une solution d'utilisation entre les multiples contrats à terme et les multiples matériaux excédentaires laminés à froid/à chaud, où, dans la solution d'utilisation, un matériau excédentaire laminé à froid/à chaud apparié est associé à un contrat à terme, et une somme maximale de poids de correspondance de l'au moins une paire de correspondance est obtenue ;
   où, dans l'unité de génération de solution d'utilisation, le calcul du graphe de relation de correspondance sur la base d'un algorithme de correspondance de poids maximum de graphe binaire, afin d'obtenir une solution d'utilisation entre les multiples contrats à terme et les multiples matériaux excédentaires laminés à froid/à chaud, comprend :

   déterminer au moins un groupe de correspondance dans l'au moins une paire de correspondance constituée d'un contrat à terme et d'un matériau excédentaire laminé à froid/à chaud dans le graphe de relation de correspondance sur la base de l'algorithme de correspondance de poids maximum de graphe binaire, selon des conditions de contrainte prédéfinies ;

mettre à jour un poids de déficience de matériau dans un contrat à terme correspondant sur la base d'un matériau excédentaire laminé à froid/à chaud de chaque groupe de correspondance dans l'au moins un groupe de correspondance ;

supprimer l'au moins un groupe de correspondance et chaque matériau excédentaire laminé à froid/à chaud dans l'au moins un groupe de correspondance du graphe de relation de correspondance, et utiliser un graphe de relation de correspondance modifié comme un nouveau graphe de relation de correspondance ;

répéter le procédé de calcul du graphe de relation de correspondance jusqu'à ce qu'il n'existe plus de paire de correspondance constituée d'un contrat à terme et d'un matériau excédentaire laminé à froid/à chaud dans le graphe de relation de correspondance, afin d'obtenir une solution d'utilisation entre les multiples contrats à terme et les multiples matériaux excédentaires laminés à froid/à chaud.

10. Appareil selon la revendication 9, où l'unité de détermination de graphe de relation de correspondance comprend :

une sous-unité de détermination de règle d'utilisation, configurée pour déterminer une règle d'utilisation, où la règle d'utilisation est utilisée pour vérifier si les multiples contrats à terme correspondent aux multiples matériaux excédentaires laminés à froid/à chaud ;

une sous-unité de génération de paires de correspondance, configurée pour former au moins une paire de correspondance constituée d'un contrat à terme et d'un matériau excédentaire laminé à froid/à chaud qui satisfait à la règle d'utilisation prédéfinie, en prenant les multiples contrats à terme et les multiples matériaux excédentaires laminés à froid/à chaud comme nœuds dans un graphe binaire pondéré.

11. Appareil selon la revendication 9, où, dans l'unité de détermination de graphe de relation de correspondance, la détermination d'un poids de correspondance de chaque paire de correspondance dans l'au moins une paire de correspondance comprend :

déterminer un poids de correspondance pour chaque paire de correspondance dans l'au moins une paire de correspondance selon des informations de priorité de correspondance prédéfinies, où les informations de priorité de correspondance sont utilisées pour décrire une qualité de correspondance entre les multiples contrats à terme et les multiples matériaux excédentaires laminés à froid/à chaud.

12. Appareil selon la revendication 11, où, dans l'unité de détermination du graphe de relation de correspondance, la détermination d'un poids de correspondance pour chaque paire de correspondance dans l'au moins une paire de correspondance selon des informations de priorité de correspondance prédéfinies comprend :

déterminer un niveau de priorité d'un contrat à terme dans chaque paire de correspondance dans l'au moins une paire de correspondance, selon des informations de priorité de correspondance prédéfinies ;

déterminer un poids de correspondance de chaque paire de correspondance dans l'au moins une paire de correspondance, selon le niveau de priorité et le poids d'un matériau excédentaire laminé à froid/à chaud dans chaque paire de correspondance.

13. Appareil selon l'une quelconque des revendications 10 à 12, où, dans l'unité de détermination de graphe de relation de correspondance, la règle d'utilisation inclut au moins l'une parmi les suivantes : une règle d'un type de spécification, une règle d'un type de surface, une règle d'un type de performance et de procédé, une règle d'un type de gestion, et une règle d'un type de composant.

14. Appareil selon l'une quelconque des revendications 11 à 12, où, dans l'unité de détermination de graphe de relation de correspondance, les informations de priorité de correspondance incluent un contenu de priorité et un niveau de priorité, et incluent au moins l'une parmi les suivantes : des informations de priorité de contrat, des informations de priorité de matériau, et des informations de priorité d'adaptation.

15. Appareil selon la revendication 9, où l'appareil comprend en outre :
une unité d'inspection de poids, configurée pour réaliser une inspection de poids sur chaque paire de correspondance restante dans le graphe de relation de correspondance, conserver les paires de correspondance qui satisfont à une règle d'inspection de poids et supprimer les paires de correspondance qui ne satisfont pas à la règle d'inspection de poids.

16. Appareil selon l'une quelconque des revendications 9 à 15, où, dans l'unité de génération de solutions d'utilisation, les conditions de contrainte incluent au moins l'une parmi les suivantes : une contrainte de quantité de correspondance, une contrainte de poids de déficience de procédé de contrat, une contrainte de règle d'utilisation et une contrainte de valeur de variable de décision.

17. Support de stockage non transitoire lisible par ordinateur stockant des instructions, où, lorsque les instructions sont exécutées sur un ordinateur, les instructions amènent l'ordinateur à exécuter la méthode selon l'une quelconque des revendications 1 à 8.

18. Dispositif électronique, comprenant :

une mémoire, configurée pour stocker des instructions exécutées par un ou plusieurs processeurs du dispositif électronique ; et
un processeur, qui est l'un des processeurs du dispositif électronique, configuré pour exécuter la méthode selon l'une quelconque des revendications 1 à 8.

19. Produit de programme informatique comprenant des programmes/instructions informatiques, où les programmes/instructions informatiques sont exécutés par un processeur pour mettre en œuvre la méthode selon l'une quelconque des revendications 1 à 8.

FIG. 1

400 —

401

processor

402

403

404

coprocessor

controller hub

memory

405

406

I/O

NIC

FIG. 2

obtaining multiple futures contracts and multiple cold/ hot-rolled excess materials with same steel grade — S310

constructing a matching relationship graph between the multiple futures contracts and the multiple cold/hot-rolled excess materials — S320

determining a use solution between the futures contracts and the cold/hot-rolled excess materials — S330

FIG. 3

Futures contracts                    Cold/hot-rolled excess materials

FIG. 4

```
┌─────────────────────────────────────────────┐
│                                             │   S510
│          determining the rule of use        │
│                                             │
└─────────────────────────────────────────────┘
                      │
                      ▼
┌─────────────────────────────────────────────┐
│   forming at least one matching pair         │   S520
│   consisting of a futures contract and a     │
│   cold/hot-rolled excess material that meet  │
│   the preset rule of use                     │
└─────────────────────────────────────────────┘
```

FIG. 5

```
┌─────────────────────────────────────────────┐
│   determining, according to preset matching  │   S610
│   priority information, a priority level of   │
│   futures contract in each matching pair in  │
│   the matching relationship graph            │
└─────────────────────────────────────────────┘
                      │
                      ▼
┌─────────────────────────────────────────────┐
│   determining matching weight of each        │   S620
│   matching pair according to the priority    │
│   level and the material weight of           │
│   cold/hot-rolled excess material in each    │
│   matching pair                              │
└─────────────────────────────────────────────┘
```

FIG. 6

determining at least one matching group in the at least one matching pair consisting of a futures contract and a cold/hot-rolled excess material in a matching relationship graph by using a maximum weight matching algorithm ⟩ S710

updating the material deficiency weight in the corresponding futures contract based on weight of cold/hot-rolled excess material of each matching group in the at least one matching group ⟩ S720

removing the at least one matching group and each cold/hot-rolled excess material in the at least one matching group from the matching relationship graph, and using the changed matching relationship graph as a new matching relationship graph ⟩ S730

repeating the process of computing the matching relationship graph until no matching pair consisting of a futures contract and a cold/hot-rolled excess material exist in the matching relationship graph ⟩ S740

FIG. 7

Futures contracts                    Cold/hot-rolled excess materials

w11=3.12

w12=2.36

w13=1.09

w22=3.57

w24=2.83

w33=3.61

w15=1.48

w16=1.63

w36=2.27

FIG. 8 (a)

Futures contracts                    Cold/hot-rolled excess materials

FIG. 8 (b)

Futures contracts                    Cold/hot-rolled excess materials

FIG. 8 (c)

Futures contracts                    Cold/hot-rolled excess materials

w24=2.83

w15=1.48

w16=1.63

w36=2.27

FIG. 8 (d)

Futures contracts                    Cold/hot-rolled excess materials

FIG. 8 (e)

Futures contracts                    Cold/hot-rolled excess materials

w11=3.12

w22=3.57

w24=2.83

w33=3.61

w15=1.48

w36=2.27

FIG. 8 (f)

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210017717

- JP 2003330528 A